# EUROPÄISCHE PATENTANMELDUNG

(11) **EP 3 926 551 A1**
(43) Veröffentlichungstag der Anmeldung: **22.12.2021**
(21) Anmeldenummer: 20179989.7
(22) Anmeldetag: 15.06.2020
(51) Int. Cl.: G06N 5/04

(54) **VERFAHREN ZUR UNTERSTÜTZUNG DES VERBESSERTEN BETRIEBS EINES ÜBER EIN TELEKOMMUNIKATIONSNETZ EINEM TELEKOMMUNIKATIONSENDGERÄT BEREITGESTELLTEN FRAGE-UND-ANTWORT-DIENST, SYSTEM, TELEKOMMUNIKATIONSNETZ FRAGE-UND-ANTWORT-DIENST, COMPUTERPROGRAMM UND COMPUTERLESBARES MEDIUM**

(71) Anmelder: Deutsche Telekom AG, 53113 Bonn (DE)
(72) Erfinder: JOHANNHÖRSTER, Katja, 64297 Darmstadt (DE)
(74) Vertreter: Schwöbel, Thilo K.

(57) **Zusammenfassung**

Es wird ein Verfahren zur Unterstützung des verbesserten Betriebs eines über ein Telekommunikationsnetz einem Telekommunikationsendgerät bereitgestellten Frage-und-Antwort-Dienst, wobei der Frage-und-Antwort-Dienst ein Künstliche-Intelligenz-System umfasst oder Zugriff auf ein solches hat oder benutzt, wobei dem Künstliche-Intelligenz-System als Eingangsgröße eine Frageinformation zugeführt wird und das Künstliche-Intelligenz-System als Ausgangsgröße eine Antwortinformation erzeugt und/oder, insbesondere an das Telekommunikationsendgerät, bereitstellt, wobei das Künstliche-Intelligenz-System ein Open-Domain Künstliche-Intelligenz-System ist und ein erstes Künstliche-Intelligenz-Modul sowie ein zweites Künstliche-Intelligenz-Modul aufweist oder implementiert, wobei das erste Künstliche-Intelligenz-Modul Teil oder Ziel einer Reading-Comprehension-Verarbeitungskette ist und wobei das zweite Künstliche-Intelligenz-Modul Teil oder Ziel einer Search-Verarbeitungskette ist, wobei das Verfahren, bezogen auf eine zu behandelnde Frageinformation und zur Erzeugung einer zu gebenden Antwortinformation, die nachfolgenden Schritte aufweist:
-- in einem ersten Schritt wird die zu behandelnde Frageinformation der Reading-Comprehension-Verarbeitungskette und der Search-Verarbeitungskette zugeführt,
-- in einem dem ersten Schritt nachfolgenden zweiten Schritt wird durch die oder in der Search-Verarbeitungskette wenigstens eine Absatzinformation erzeugt und der Reading-Comprehension-Verarbeitungskette zugeführt,
-- in einem dem zweiten Schritt nachfolgenden dritten Schritt generiert
-- das erste Künstliche-Intelligenz-Modul eine erste Antwort-Kandidat-Information basierend auf der Reading-Comprehension-Verarbeitungskette und der wenigstens einen Absatzinformation und
-- das zweite Künstliche-Intelligenz-Modul eine zweite Antwort-Kandidat-Information basierend auf der Search-Verarbeitungskette, wobei die erste Antwort-Kandidat-Information eine erste Score-Information umfasst und wobei die zweite Antwort-Kandidat-Information eine zweite Score-Information umfasst,
-- in einem dem dritten Schritt nachfolgenden vierten Schritt wird mittels oder in einer Validierungs-Gewissheits-Verarbeitungskette bewertet und/oder entschieden, ob als zu gebende Antwortinformation
-- die oder ein Teil der ersten Antwort-Kandidat-Information oder
-- die oder ein Teil der zweiten Antwort-Kandidat-Information oder
-- keine von beiden
ausgewählt wird oder auszuwählen ist.

## Beschreibung

### Stand der Technik

Die Erfindung betrifft ein Verfahren zur Unterstützung des verbesserten Betriebs eines über ein Telekommunikationsnetz einem Telekommunikationsendgerät bereitgestellten Frage-und-Antwort-Dienst, wobei der Frage-und-Antwort-Dienst ein Künstliche-Intelligenz-System umfasst oder Zugriff auf ein solches hat oder benutzt, wobei dem Künstliche-Intelligenz-System als Eingangsgröße eine Frageinformation zugeführt wird und das Künstliche-Intelligenz-System als Ausgangsgröße eine Antwortinformation erzeugt und/oder, insbesondere an das Telekommunikationsendgerät, bereitstellt.

Die Erfindung betrifft des Weiteren ein System zur Unterstützung des verbesserten Betriebs eines über ein Telekommunikationsnetz einem Telekommunikationsendgerät bereitgestellten Frage-und-Antwort-Dienst, wobei der Frage-und-Antwort-Dienst ein Künstliche-Intelligenz-System umfasst oder Zugriff auf ein solches hat oder benutzt, wobei dem Künstliche-Intelligenz-System als Eingangsgröße eine Frageinformation zugeführt wird und das Künstliche-Intelligenz-System als Ausgangsgröße eine Antwortinformation erzeugt und/oder, insbesondere an das Telekommunikationsendgerät, bereitstellt.

Die Erfindung betrifft ferner ein Telekommunikationsnetz zur Unterstützung des verbesserten Betriebs eines einem mit dem Telekommunikationsnetz verbundenen Telekommunikationsendgeräts bereitgestellten Frage-und-Antwort-Dienst, wobei der Frage-und-Antwort-Dienst ein Künstliche-Intelligenz-System umfasst oder Zugriff auf ein solches hat oder benutzt, wobei dem Künstliche-Intelligenz-System als Eingangsgröße eine Frageinformation zugeführt wird und das Künstliche-Intelligenz-System als Ausgangsgröße eine Antwortinformation erzeugt und/oder, insbesondere an das Telekommunikationsendgerät, bereitstellt.

Ferner betrifft die Erfindung einen Frage-und-Antwort-Dienst bzw. ein Frage-und-Antwort-Dienst-System zur Bereitstellung an ein Telekommunikationsendgerät über ein Telekommunikationsnetz, wobei der Frage-und-Antwort-Dienst ein Künstliche-Intelligenz-System umfasst oder Zugriff auf ein solches hat oder benutzt, wobei dem Künstliche-Intelligenz-System als Eingangsgröße eine Frageinformation zugeführt wird und das Künstliche-Intelligenz-System als Ausgangsgröße eine Antwortinformation erzeugt und/oder, insbesondere an das Telekommunikationsendgerät, bereitstellt.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Die Beantwortung - insbesondere in vertrauenswürdiger und fundierter Weise - von natürlichsprachlichen Fragen in automatisierter Weise und ohne zwingende menschliche Interaktion stellt in vielen technischen Gebieten und Anwendungsbereichen eine Herausforderung dar.

### Offenbarung der Erfindung

Der Erfindung liegt die Aufgabe zugrunde, ein optimiertes Verfahren zur Unterstützung des verbesserten Betriebs eines über ein Telekommunikationsnetz einem Telekommunikationsendgerät bereitgestellten Frage-und-Antwort-Dienst bereitzustellen, wobei es das Verfahren in vergleichsweise einfacher und effizienter Weise ermöglicht, dass der Frage-und-Antwort-Dienst ein Künstliche-Intelligenz-System nutzt, wobei dem Künstliche-Intelligenz-System als Eingangsgröße eine Frageinformation zugeführt wird und das Künstliche-Intelligenz-System als Ausgangsgröße eine Antwortinformation erzeugt und/oder, insbesondere an das Telekommunikationsendgerät, bereitstellt.

Die Aufgabe wird erfindungsgemäß gelöst durch ein Verfahren zur Unterstützung des verbesserten Betriebs eines über ein Telekommunikationsnetz einem Telekommunikationsendgerät bereitgestellten Frage-und-Antwort-Dienst, wobei der Frage-und-Antwort-Dienst ein Künstliche-Intelligenz-System umfasst oder Zugriff auf ein solches hat oder benutzt, wobei dem Künstliche-Intelligenz-System als Eingangsgröße eine Frageinformation zugeführt wird und das Künstliche-Intelligenz-System als Ausgangsgröße eine Antwortinformation erzeugt und/oder, insbesondere an das Telekommunikationsendgerät, bereitstellt, wobei das Künstliche-Intelligenz-System ein Open-Domain Künstliche-Intelligenz-System ist und ein erstes Künstliche-Intelligenz-Modul sowie ein zweites Künstliche-Intelligenz-Modul aufweist oder implementiert, wobei das erste Künstliche-Intelligenz-Modul Teil oder Ziel einer Reading-Comprehension-Verarbeitungskette ist und wobei das zweite Künstliche-Intelligenz-Modul Teil oder Ziel einer Search-Verarbeitungskette ist,
wobei das Verfahren, bezogen auf eine zu behandelnde Frageinformation und zur Erzeugung einer zu gebenden Antwortinformation, die nachfolgenden Schritte aufweist:
-- in einem ersten Schritt wird die zu behandelnde Frageinformation der Reading-Comprehension-Verarbeitungskette und der Search-Verarbeitungskette zugeführt,
-- in einem dem ersten Schritt nachfolgenden zweiten Schritt wird durch die oder in der Search-Verarbeitungskette wenigstens eine Absatzinformation erzeugt und der Reading-Comprehension-Verarbeitungskette zugeführt,
-- in einem dem zweiten Schritt nachfolgenden dritten Schritt generiert
   -- das erste Künstliche-Intelligenz-Modul eine erste Antwort-Kandidat-Information basierend auf der Reading-Comprehension-Verarbeitungskette und der wenigstens einen Absatzinformation und
   -- das zweite Künstliche-Intelligenz-Modul eine zweite Antwort-Kandidat-Information basierend auf der Search-Verarbeitungskette, wobei die erste Antwort-Kandidat-Information eine erste Score-Information umfasst und wobei die zweite Antwort-Kandidat-Information eine zweite Score-Information umfasst,
-- in einem dem dritten Schritt nachfolgenden vierten Schritt wird mittels oder in einer Validierungs-Gewissheits-Verarbeitungskette bewertet und/oder entschieden, ob als zu gebende Antwortinformation
   -- die oder ein Teil der ersten Antwort-Kandidat-Information oder
   -- die oder ein Teil der zweiten Antwort-Kandidat-Information oder
   -- keine von beiden
ausgewählt wird oder auszuwählen ist.

Es ist dadurch gemäß der vorliegenden Erfindung in vorteilhafter Weise möglich, dass ein höheres Maß bzw. ein vergleichsweise hohes Maß an vertrauenswürdiger und fundierter Information Eingang in die Beantwortung - in automatisierter Weise und ohne menschliche Interaktion - von natürlichsprachlichen Fragen findet, insbesondere in einem technischen Kontext.

Die Möglichkeit in automatisierter Weise und ohne zwingende menschliche Interaktion natürlichsprachliche Fragen stellen zu können und richtige (im Sinne von einen hohen Wahrheitswert aufweisende und relevante Information tragende) sowie insbesondere sinnvolle Antworten zu erhalten, ist in vielen technischen Bereichen nützlich.

Solche mögliche Anwendungsszenarien umfassen beispielsweise Szenarien wie die Bereitstellung einer Reparaturanleitung oder Reparaturanweisung für ein technisches Gerät an eine Person mit vergleichsweis geringer Übung in der Nutzung des technischen Geräts oder eine Person, die hinsichtlich der Reparatur des technischen Geräts vergleichsweise wenig Übung oder Erfahrung aufweist. Weitere Anwendungen umfassen die Bereitstellung einer Antwort auf eine natürlichsprachliche Frage im Bereich einer Auskunft zur Herstellung eines technischen Geräts oder zur Reparatur oder Herstellung eines Systems in den verschiedensten Anwendungsbereichen, etwa im Bereich der Energieeinsparung oder im Bereich der Realisierung eines technischen Schutzes vor den Auswirkungen einer Klimaänderung oder dergleichen. Eine Vielzahl weiterer Anwendungsbereiche von Systemen und Verfahren zur Beantwortung natürlichsprachlicher Fragen, die ausgerichtet sind auf eine Anwendung oder Verwendung von Antworten auf natürlichsprachliche Frage sind denkbar und im Rahmen der vorliegenden Erfindung angesprochen.

Erfindungsgemäß wird dem Künstliche-Intelligenz-System als Eingangsgröße eine Frageinformation zugeführt und das Künstliche-Intelligenz-System erzeugt als Ausgangsgröße eine Antwortinformation bzw. stellt diese Antwortinformation - insbesondere an das Telekommunikationsendgerät - bereit.

Erfindungsgemäß ist das Künstliche-Intelligenz-System als ein Open-Domain Künstliche-Intelligenz-System realisiert. Da die Beantwortung von natürlichsprachlichen Fragen stark von einem guten Suchkorpus abhängt, d.h. eine Vielzahl von Dokumenten, die die Antworten auf mögliche Fragen enthalten, ist es erfindungsgemäß vorgesehen, einen thematisch offenen Suchkorpus zu verwenden. Zusätzlich spielt eine Rolle, dass möglichst eine große Redundanz von Informationen in einem solchen thematisch offenen Suchkorpus bzw. einem solchen Open Domain Künstliche-Intelligenz-System vorhanden ist. Auch hierdurch ist es erfindungsgemäß vorteilhaft möglich, dass mögliche richtige Antworten von falsch-positiven Antworten unterschieden werden können. Ein Open-Domain-Fragebeantwortungssystem, d.h. basierend auf einer (thematisch) offenen Domäne, zielt darauf ab, als Antwort auf die Frage des Benutzers eine Antwort beispielsweise in Form eines vergleichsweise kurzen Textes, jedenfalls nicht in Form einer Liste von Treffern oder von relevanten Dokumenten. Als Eingabe bzw. als Eingangsgröße wird natürlichsprachliche Frage, d.h. eine Frageinformation, verwendet und eine Antwortinformation als Ausgangsgröße erzeugt bzw. diese bereitstellt, insbesondere an das betreffende Telekommunikationsendgerät, mittels dem die Frageinformation erzeugt wurde oder mittels dem die Frageinformation übermittelt wurde.

Erfindungsgemäß weist das Künstliche-Intelligenz-System ein erstes Künstliche-Intelligenz-Modul sowie ein zweites Künstliche-Intelligenz-Modul auf bzw. implementiert dieses. Das erste Künstliche-Intelligenz-Modul ist Teil von oder auch Ziel einer Reading-Comprehension-Verarbeitungskette, d.h. einer Verarbeitungskette basierend darauf natürliche Sprache maschinell zu verarbeiten, und das zweite Künstliche-Intelligenz-Modul ist Teil von oder aber auch Ziel einer Search-Verarbeitungskette, d.h. einer Verarbeitungskette basierend auf der Durchführung einer Suche (bzw. einer Suchanfrage) oder einer Mehrzahl von Suchen (bzw. mehrerer solcher Suchanfragen). Jegliches Künstliche-Intelligenz-Modul, welches im Rahmen der vorliegenden Erfindung Verwendung findet, muss mittels korrespondierender Trainingsdaten trainiert werden.

Erfindungsgemäß ist vorgesehen, dass - nachdem in einem ersten Schritt die zu behandelnde Frageinformation der Reading-Comprehension-Verarbeitungskette und der Search-Verarbeitungskette zugeführt wurde- in einem zweiten Schritt durch die oder in der Search-Verarbeitungskette wenigstens eine Absatzinformation erzeugt wird und der Reading-Comprehension-Verarbeitungskette zugeführt wird, d.h. es kommt erfindungsgemäß zunächst zu einer weitgehend parallelen Verarbeitung der Frageinformation sowohl in der oder durch die Reading-Comprehension-Verarbeitungskette, als auch in der oder durch die Search-Verarbeitungskette, was jedoch nicht bedeutet, dass die Frageinformation in der gleichen Weise von der Reading-Comprehension-Verarbeitungskette bzw. von der Search-Verarbeitungskette verarbeitet wird. Ausgehend von der Frageinformation einerseits und der durch die Search-Verarbeitungskette erzeugten Absatzinformation, welche der Reading-Comprehension-Verarbeitungskette zugeleitet bzw. zugesandt wird, andererseits, ist die Reading-Comprehension-Verarbeitungskette bzw. insbesondere das erste Künstliche-Intelligenz-Modul - in einem dritten Schritt - in der Lage eine Antwort-Kandidat-Information (nachfolgend auch als erste Antwort-Kandidat-Information bezeichnet) zu generieren oder zu erzeugen. Parallel hierzu erzeugt oder generiert (ebenfalls im oder während des dritten Schritts) auch die Search-Verarbeitungskette bzw. insbesondere das zweite Künstliche-Intelligenz-Modul eine Antwort-Kandidat-Information (nachfolgend auch als zweite Antwort-Kandidat-Information bezeichnet). Die erste Antwort-Kandidat-Information umfasst hierbei eine erste Score-Information und entsprechend umfasst auch die zweite Antwort-Kandidat-Information eine zweite Score-Information. Ausgehend von diesen beiden - auf die zu behandelnde bzw. zu beantwortende Frageinformation hin generierten - Antwort-Kandidat-Informationen der beiden Künstliche-Intelligenz-Module ist es erfindungsgemäß vorgesehen, dass in einem vierten Schritt mittels oder in oder durch eine Validierungs-Gewissheits-Verarbeitungskette bewertet und/oder entschieden wird, ob als zu gebende Antwortinformation entweder die erste (oder ein Teil der ersten) Antwort-Kandidat-Information oder aber die zweite (oder ein Teil der zweiten) Antwort-Kandidat-Information oder aber keine von beiden ausgewählt wird oder auszuwählen ist. Falls die erste Antwort-Kandidat-Information ausgewählt wird, wird diese als durch das erfindungsgemäße Verfahren automatisch generierte Antwort (auf die zu behandelnde Frageinformation) einer benutzenden Person, insbesondere einer das Telekommunikationsendgerät benutzenden Person und insbesondere auf (bzw. durch bzw. an) dem Telekommunikationsendgerät ausgegeben; falls die zweite Antwort-Kandidat-Information ausgewählt wird, gilt dies für die zweite Antwort-Kandidat-Information, während - falls keine von beiden Antwort-Kandidat-Informationen ausgewählt wird - eine Information an die nutzende Person (bzw. an das Telekommunikationsendgerät) ausgegeben wird, die zum Ausdruck bringt, dass eine Antwort auf die zu behandelnde Frageinformation nicht möglich ist bzw. dass die zu behandelnde Frage nicht beantwortet werden kann.

Erfindungsgemäß ist - wie bereits erwähnt - vorgesehen, dass ein Open-Domain Künstliche-Intelligenz-System verwendet bzw. realisiert wird. Ein solches Open Domain Q&A-System (Frage-und-Antwort-Dienst) ist ein System, das Antworten auf komplexe Wissensfragen zu finden in der Lage ist. Wissen wird als lexikalisches Wissen definiert, beispielsweise basierend auf einer Vielzahl von Dokumenten wie etwa Gerätebeschreibungen, Gerätefunktionsbeschreibungen oder sonstigen Funktionsbeschreibungen oder Wissensinhalten, beispielsweise auch umfassend Artikel oder Teile hiervon oder die Gesamtzahl der Artikel von Wikipedia (in jeweils einer Sprache bzw. in der bei der Erfassung der Frageinformation ermittelten Sprache). Die Bezeichnung Open Domain Frage-und-Antwort-Dienst wird verwendet, weil das System bzw. das erfindungsgemäße Verfahren unabhängig von einer (einzigen) (Wissens- )Domäne oder unabhängig von einem (bestimmten) Thema ist, d.h. unabhängig beispielsweise von Geräteanleitungen eines bestimmten Herstellers von Geräten oder aber von bestimmten Wissensgebieten wie etwa der Bevölkerung oder der Geographie. Das System bzw. das erfindungsgemäße Verfahren ist ferner unabhängig von jeglichem Fragetyp; es handelt sich um ein Frage- und Antwortsystem (Frage-und-Antwort-Dienst), so dass es insbesondere auf Frage-Antwort-Paaren basiert. Das erfindungsgemäße System bzw. das Verfahren gemäß der vorliegenden Erfindung ist insbesondere dafür vorgesehen, dass es mit anderen Funktionsblöcken einer Umgebung verschiedener Funktionalitäten oder Geräte oder Systeme zusammenarbeitet bzw. zusammenwirkt, wie beispielsweise dem Telekommunikationsendgerät (bzw. dem Client-Gerät, d.h. das Endgerät eines Kunden), einer Spracherkennungsfunktionalität (automatic speach recognition, ASR, automatische Spracherkennung), einer Wake-Word-Erkennung (automatische Aufweck-Wort-Erkennung, bspw. auf ein Erkennungswort "Hallo Magenta", "Technische Frage", usw. hin), eine Sprache-zu-Text-Komponente oder -funktionalität (Speech-to-Text, STT) oder auch eine Text-zu-Sprache-Komponente oder -funktionalität (Text-to-speech, TTS). Insbesondere ist das erfindungsgemäße System bzw. das Verfahren gemäß der vorliegenden Erfindung dafür vorgesehen, komplexe Wissensfragen zu beantworten bzw. Antworten auf komplexe Wissensfragen zu liefern.

Gemäß einer bevorzugten Ausführungsform der vorliegenden Erfindung ist es vorgesehen, dass das erste Künstliche-Intelligenz-Modul und/oder die Reading-Comprehension-Verarbeitungskette auf einem Modell maschinellen Lernens beruht, insbesondere auf der Basis von oder nutzend eines oder einer Mehrzahl der nachfolgenden Systeme oder Systemarchitekturen zur natürlichen Sprachverarbeitung, NLP,:
-- QANet
-- BERT (Bidirectional Encoder Representations from Transformers),
-- GPT-2 (Generative Pretrained Transformer 2),
-- GPT-3 (Generative Pretrained Transformer 3),
-- SQuAD (Stanford Question Answering Dataset),
wobei zur Generierung der ersten Antwort-Kandidat-Information die wenigstens eine Absatzinformation verwendet wird,
wobei insbesondere dem ersten Künstliche-Intelligenz-Modul - insbesondere zeitlich vor der Durchführung des ersten Schritts - Trainingsdaten umfassend Frage-und-Antwort-Paare zugeführt werden,
wobei insbesondere dem ersten Künstliche-Intelligenz-Modul die Frageinformation in ihrer ursprünglichen Form zugeführt wird.

Durch die Verwendung solcher Systeme oder Systemarchitekturen zur natürlichen Sprachverarbeitung ist es erfindungsgemäß vorteilhaft möglich eine vergleichsweise gute Performance des Gesamtsystems zu realisieren. Die Trainingsdaten für das erste Künstliche-Intelligenz-Modul sind insbesondere in Form von Frage-und-Antwort-Paaren vorgesehen, jedoch muss jegliches Künstliche-Intelligenz-Modul, welches im Rahmen der vorliegenden Erfindung Verwendung findet, mittels korrespondierender Trainingsdaten trainiert werden

Gemäß einer weiteren Ausführungsform der vorliegenden Erfindung ist es vorgesehen, dass das zweite Künstliche-Intelligenz-Modul und/oder die Search-Verarbeitungskette ein Frage-Analyse-Modul aufweist, wobei mittels des Frage-Analyse-Moduls aus der zu behandelnden Frageinformation eine strukturierte Frageinformation erzeugt wird, wobei die strukturierte Frageinformation einer Suche auf einem Open-Domain Informations-Datensatz unterzogen wird, insbesondere unter Verwendung einer Elasticsearch-Suche, wobei ferner insbesondere wenigstens eine weitere Suche durchgeführt wird, wobei insbesondere das zweite Künstliche-Intelligenz-Modul und/oder die Search-Verarbeitungskette auf einem Modell maschinellen Lernens beruht oder dieses umfasst und insbesondere ein Auswahl-Modell und/oder ein Antwort-Extraktions-Modell umfasst, wobei ferner, insbesondere zur Generierung der wenigstens einen Absatzinformation und/oder zur Generierung der zweiten Antwort-Kandidat-Information, eine Suchoperation und eine Auswahloperation mehrfach erfolgt,
wobei insbesondere zur Generierung der zweiten Antwort-Kandidat-Information das Auswahl-Extraktions-Modell verwendet wird,
wobei insbesondere wenigstens ein Markierungsschritt, insbesondere in Verbindung mit einer Elasticsearch-Suche erfolgt.

Hierdurch ist es erfindungsgemäß in vorteilhafter Weise möglich, dass eine genauere Suche und somit auch bessere Ergebnisse der Suche realisiert werden.

Gemäß einer weiteren Ausführungsform der vorliegenden Erfindung ist es vorgesehen, dass das zweite Künstliche-Intelligenz-Modul und/oder die Search-Verarbeitungskette eine Antwort-Extrahierungs-Funktionalität aufweist, wobei die Antwort-Extrahierungs-Funktionalität insbesondere auf der Basis der Absatzinformation, einen oder eine Mehrzahl von Sätzen aus einem ausgewählten Textabsatz auswählt und als zweite Antwort-Kandidat-Information oder als einen Teil davon bereitstellt.

Hierdurch ist es gemäß solcher Ausführungsformen der Erfindung vorteilhaft möglich, gute Ergebnisse zu erzielen und eine vergleichsweise gute Performance des Gesamtsystems zu realisieren.

Gemäß einer weiteren Ausführungsform der vorliegenden Erfindung ist es vorgesehen, dass die Validierungs-Gewissheits-Verarbeitungskette eine Ensemble-Steuerungseinrichtung und ein drittes Künstliche-Intelligenz-Modul aufweist, wobei mittels der Ensemble-Steuerungseinrichtung eine Auswahl aus der ersten und zweiten Antwort-Kandidat-Information auf der Basis der ersten und zweiten Score-Information vorgenommen wird und wobei mittels des dritten Künstliche-Intelligenz-Modul eine Validierung hinsichtlich der Gewissheit einer richtigen Antwort der ersten Antwort-Kandidat-Information und/oder der zweiten Antwort-Kandidat-Information erfolgt, wobei insbesondere die Auswahl aus der ersten und zweiten Antwort-Kandidat-Information in einem ersten Sub-Schritt des vierten Schritts vorgenommen wird und lediglich die ausgewählte Antwort-Kandidat-Information in einem zweiten Sub-Schritt des vierten Schritts mittels des dritten Künstliche-Intelligenz-Moduls validiert wird.

Hierdurch ist es gemäß der vorliegenden Erfindung in einfacher Weise möglich, in besonders zuverlässiger Weise gute Antwortergebnisse zu realisieren.

Gemäß einer weiteren Ausführungsform der vorliegenden Erfindung ist es vorgesehen, dass der Frage-und-Antwort-Dienst- neben dem Künstliche-Intelligenz-System - ferner ein weiteres Künstliche-Intelligenz-System umfasst oder Zugriff auf ein solches hat oder benutzt, wobei dem weiteren Künstliche-Intelligenz-System als Eingangsgröße ebenfalls eine Frageinformation zugeführt wird und das weitere Künstliche-Intelligenz-System als Ausgangsgröße ebenfalls eine Antwortinformation erzeugt und/oder, insbesondere an das Telekommunikationsendgerät, bereitstellt, wobei das weitere Künstliche-Intelligenz-System ein Closed-Domain Künstliche-Intelligenz-System ist und ein Natürliche-Sprache-Verständnis-Modul aufweist, wobei das Verfahren, bezogen auf die zu behandelnde Frageinformation und zur Erzeugung einer zu gebenden Antwortinformation, ferner in einem fünften, zeitlich vor dem ersten Schritt erfolgenden Schritt die Bestimmung einer Intent-Information umfasst, wobei in Abhängigkeit der Intent-Information entschieden wird, ob die Frageinformation dem Künstliche-Intelligenz-System oder dem weiteren Künstliche-Intelligenz-System zur Generieriung der Antwortinformation zugeleitet wird,
wobei insbesondere das weitere Künstliche-Intelligenz-System zur Generierung der Antwortinformation ausgewählt wird, sofern die bestimmte Intent-Information einen Wert aus einer vorherbestimmten Gruppe von Intent-Information-Werten aufweist, während das Künstliche-Intelligenz-System zur Generierung der Antwortinformation ausgewählt wird, sofern die bestimmte Intent-Information wenigstens einen anderen Wert aufweist oder einem non-intent-Wert entspricht.

Hierdurch ist es erfindungsgemäß in vorteilhafter Weise möglich, dass eine genauere Suche und somit auch bessere Ergebnisse der Suche realisiert werden. Insbesondere ist das erfindungsgemäße System bzw. das Verfahren gemäß der vorliegenden Erfindung dafür vorgesehen, komplexe Wissensfragen zu beantworten bzw. Antworten auf komplexe Wissensfragen zu liefern; für einfache oder einfachere Wissensfragen ist insbesondere optional ein weiteres Künstliche-Intelligenz-System vorgesehen, wobei hierbei Beispiele für einfache Wissensfragen etwa lauten: "Welche Abmessungen hat 'System X'?" (mit einem Intent-Information-Wert etwa "System_Größe/Abmessungen"); "Wie alt ist 'Person Y'?" (mit einem Intent-Information-Wert etwa "Person_Alter").

Gemäß einer weiteren Ausführungsform der vorliegenden Erfindung ist es vorgesehen, dass der über das Telekommunikationsnetz dem Telekommunikationsendgerät bereitgestellte Frage-und-Antwort-Dienst neben dem Künstliche-Intelligenz-System eine Spracherkennungsfunktionalität und/oder eine Sprechererkennungsfunktionalität und/oder eine Aufweck-Wort-Funktionalität und/oder eine Sprache-zu-Text-Funktionalität und/oder eine Text-zu-Sprache-Funktionalität umfasst.

Hierdurch ist es gemäß einer Ausführungsform der Erfindung in vorteilhafter Weise möglich, dass die Antwortinformation in besonders einfacher und komfortabler Weise auf dem Telekommunikationsendgerät ausgegeben werden kann bzw. vom Telekommunikationsendgerät zum erfindungsgemäßen System, insbesondere dem Frage-und-Antwort-Dienst, zugeleitet werden kann.

Des Weiteren wird die Aufgabe gelöst durch ein System zur Unterstützung des verbesserten Betriebs eines über ein Telekommunikationsnetz einem Telekommunikationsendgerät bereitgestellten Frage-und-Antwort-Dienst, wobei der Frage-und-Antwort-Dienst ein Künstliche-Intelligenz-System umfasst oder Zugriff auf ein solches hat oder benutzt, wobei dem Künstliche-Intelligenz-System als Eingangsgröße eine Frageinformation zugeführt wird und das Künstliche-Intelligenz-System als Ausgangsgröße eine Antwortinformation erzeugt und/oder, insbesondere an das Telekommunikationsendgerät, bereitstellt, wobei das Künstliche-Intelligenz-System ein Open-Domain Künstliche-Intelligenz-System ist und ein erstes Künstliche-Intelligenz-Modul sowie ein zweites Künstliche-Intelligenz-Modul aufweist oder implementiert, wobei das erste Künstliche-Intelligenz-Modul Teil oder Ziel einer Reading-Comprehension-Verarbeitungskette ist und wobei das zweite Künstliche-Intelligenz-Modul Teil oder Ziel einer Search-Verarbeitungskette ist,
wobei das System, bezogen auf eine zu behandelnde Frageinformation und zur Erzeugung einer zu gebenden Antwortinformation, derart konfiguriert ist, dass:
-- die zu behandelnde Frageinformation wird der Reading-Comprehension-Verarbeitungskette und der Search-Verarbeitungskette zugeführt,
-- es wird durch die oder in der Search-Verarbeitungskette wenigstens eine Absatzinformation erzeugt und der Reading-Comprehension-Verarbeitungskette zugeführt,
-- es generiert
   -- das erste Künstliche-Intelligenz-Modul eine erste Antwort-Kandidat-Information basierend auf der Reading-Comprehension-Verarbeitungskette und der wenigstens einen Absatzinformation und
   -- das zweite Künstliche-Intelligenz-Modul eine zweite Antwort-Kandidat-Information basierend auf der Search-Verarbeitungskette, wobei die erste Antwort-Kandidat-Information eine erste Score-Information umfasst und wobei die zweite Antwort-Kandidat-Information eine zweite Score-Information umfasst,
-- es wird mittels oder in einer Validierungs-Gewissheits-Verarbeitungskette bewertet und/oder entschieden, ob als zu gebende Antwortinformation
   -- die oder ein Teil der ersten Antwort-Kandidat-Information oder
   -- die oder ein Teil der zweiten Antwort-Kandidat-Information oder
   -- keine von beiden
ausgewählt wird oder auszuwählen ist.

Es ist dadurch gemäß der vorliegenden Erfindung in vorteilhafter Weise möglich, ein zum erfindungsgemäßen Verfahren korrespondierendes erfindungsgemäßes System bereitzustellen und somit einen verbesserten Betrieb eines mittels insbesondere des mit dem Telekommunikationsnetz verbundenen Telekommunikationsendgeräts bereitgestellten Frage-und-Antwort-Dienst zu erreichen.

Die Aufgabe wird ferner gelöst durch ein Telekommunikationsnetz zur Unterstützung des verbesserten Betriebs eines einem mit dem Telekommunikationsnetz verbundenen Telekommunikationsendgeräts bereitgestellten Frage-und-Antwort-Dienst, wobei der Frage-und-Antwort-Dienst ein Künstliche-Intelligenz-System umfasst oder Zugriff auf ein solches hat oder benutzt, wobei dem Künstliche-Intelligenz-System als Eingangsgröße eine Frageinformation zugeführt wird und das Künstliche-Intelligenz-System als Ausgangsgröße eine Antwortinformation erzeugt und/oder, insbesondere an das Telekommunikationsendgerät, bereitstellt, wobei das Künstliche-Intelligenz-System ein Open-Domain Künstliche-Intelligenz-System ist und ein erstes Künstliche-Intelligenz-Modul sowie ein zweites Künstliche-Intelligenz-Modul aufweist oder implementiert, wobei das erste Künstliche-Intelligenz-Modul Teil oder Ziel einer Reading-Comprehension-Verarbeitungskette ist und wobei das zweite Künstliche-Intelligenz-Modul Teil oder Ziel einer Search-Verarbeitungskette ist,
wobei das Telekommunikationsnetz, bezogen auf eine zu behandelnde Frageinformation und zur Erzeugung einer zu gebenden Antwortinformation, derart konfiguriert ist, dass:
-- die zu behandelnde Frageinformation wird der Reading-Comprehension-Verarbeitungskette und der Search-Verarbeitungskette zugeführt,
-- es wird durch die oder in der Search-Verarbeitungskette wenigstens eine Absatzinformation erzeugt und der Reading-Comprehension-Verarbeitungskette zugeführt,
-- es generiert
   -- das erste Künstliche-Intelligenz-Modul eine erste Antwort-Kandidat-Information basierend auf der Reading-Comprehension-Verarbeitungskette und der wenigstens einen Absatzinformation und
   -- das zweite Künstliche-Intelligenz-Modul eine zweite Antwort-Kandidat-Information basierend auf der Search-Verarbeitungskette, wobei die erste Antwort-Kandidat-Information eine erste Score-Information umfasst und wobei die zweite Antwort-Kandidat-Information eine zweite Score-Information umfasst,
-- es wird mittels oder in einer Validierungs-Gewissheits-Verarbeitungskette bewertet und/oder entschieden, ob als zu gebende Antwortinformation
   -- die oder ein Teil der ersten Antwort-Kandidat-Information oder
   -- die oder ein Teil der zweiten Antwort-Kandidat-Information oder
   -- keine von beiden
ausgewählt wird oder auszuwählen ist.

Es ist dadurch gemäß der vorliegenden Erfindung in vorteilhafter Weise möglich, ein zum erfindungsgemäßen Verfahren korrespondierendes erfindungsgemäßes Telekommunikationsnetz bereitzustellen und somit einen verbesserten Betrieb eines mittels insbesondere des mit dem Telekommunikationsnetz verbundenen Telekommunikationsendgeräts bereitgestellten Frage-und-Antwort-Dienst zu erreichen.

Ferner wird die Ausgabe gelöst durch einen Frage-und-Antwort-Dienst oder ein Frage-und-Antwort-Dienst-System zur Bereitstellung an ein Telekommunikationsendgerät über ein Telekommunikationsnetz, wobei der Frage-und-Antwort-Dienst ein Künstliche-Intelligenz-System umfasst oder Zugriff auf ein solches hat oder benutzt, wobei dem Künstliche-Intelligenz-System als Eingangsgröße eine Frageinformation zugeführt wird und das Künstliche-Intelligenz-System als Ausgangsgröße eine Antwortinformation erzeugt und/oder, insbesondere an das Telekommunikationsendgerät, bereitstellt, wobei das Künstliche-Intelligenz-System ein Open-Domain Künstliche-Intelligenz-System ist und ein erstes Künstliche-Intelligenz-Modul sowie ein zweites Künstliche-Intelligenz-Modul aufweist oder implementiert, wobei das erste Künstliche-Intelligenz-Modul Teil oder Ziel einer Reading-Comprehension-Verarbeitungskette ist und wobei das zweite Künstliche-Intelligenz-Modul Teil oder Ziel einer Search-Verarbeitungskette ist,
wobei der Frage-und-Antwort-Dienst, bezogen auf eine zu behandelnde Frageinformation und zur Erzeugung einer zu gebenden Antwortinformation, derart konfiguriert ist, dass:
-- die zu behandelnde Frageinformation wird der Reading-Comprehension-Verarbeitungskette und der Search-Verarbeitungskette zugeführt,
-- es wird durch die oder in der Search-Verarbeitungskette wenigstens eine Absatzinformation erzeugt und der Reading-Comprehension-Verarbeitungskette zugeführt,
-- es generiert
   -- das erste Künstliche-Intelligenz-Modul eine erste Antwort-Kandidat-Information basierend auf der Reading-Comprehension-Verarbeitungskette und der wenigstens einen Absatzinformation und
   -- das zweite Künstliche-Intelligenz-Modul eine zweite Antwort-Kandidat-Information basierend auf der Search-Verarbeitungskette, wobei die erste Antwort-Kandidat-Information eine erste Score-Information umfasst und wobei die zweite Antwort-Kandidat-Information eine zweite Score-Information umfasst,
-- es wird mittels oder in einer Validierungs-Gewissheits-Verarbeitungskette bewertet und/oder entschieden, ob als zu gebende Antwortinformation
   -- die oder ein Teil der ersten Antwort-Kandidat-Information oder
   -- die oder ein Teil der zweiten Antwort-Kandidat-Information oder
   -- keine von beiden
ausgewählt wird oder auszuwählen ist.

Es ist dadurch gemäß der vorliegenden Erfindung in vorteilhafter Weise möglich, einen zum erfindungsgemäßen Verfahren korrespondierenden erfindungsgemäßen Frage-und-Antwort-Dienst oder ein Frage-und-Antwort-Dienst-System bereitzustellen und somit einen verbesserten Betrieb eines mittels insbesondere des mit dem Telekommunikationsnetz verbundenen Telekommunikationsendgeräts bereitgestellten Frage-und-Antwort-Dienst zu erreichen.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere auf dem erfindungsgemäßen System oder einem Netzwerkknoten des Telekommunikationsnetzes oder einem Frage-und-Antwort-Dienst oder ein Frage-und-Antwort-Dienst-System ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 11 speichert oder überträgt oder wobei das computerlesbare Medium oder das Datenträgersignal den auf der programmierbaren Einrichtung, insbesondere auf einem Netzwerkknoten des Telekommunikationsnetzes und/oder als Teil des Frage-und-Antwort-Dienstes, auszuführenden Teil des Computerprogramms nach Anspruch 11 speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines Telekommunikationsnetzes zur Unterstützung des verbesserten Betriebs eines an ein Telekommunikationsendgerät bereitgestellten Frage-und-Antwort-Dienstes.
- **Figur 2**: zeigt schematisch ein erfindungsgemäßes Künstliche-Intelligenz-System für einen erfindungsgemäßen Frage-und-Antwort-Dienst eines Telekommunikationsnetzes.
- **Figur 3**: zeigt schematisch den erfindungsgemäßen Frage-und-Antwort-Dienst mit dem Künstliche-Intelligenz-System und einem weiteren Künstliche-Intelligenz-System.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequentiellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

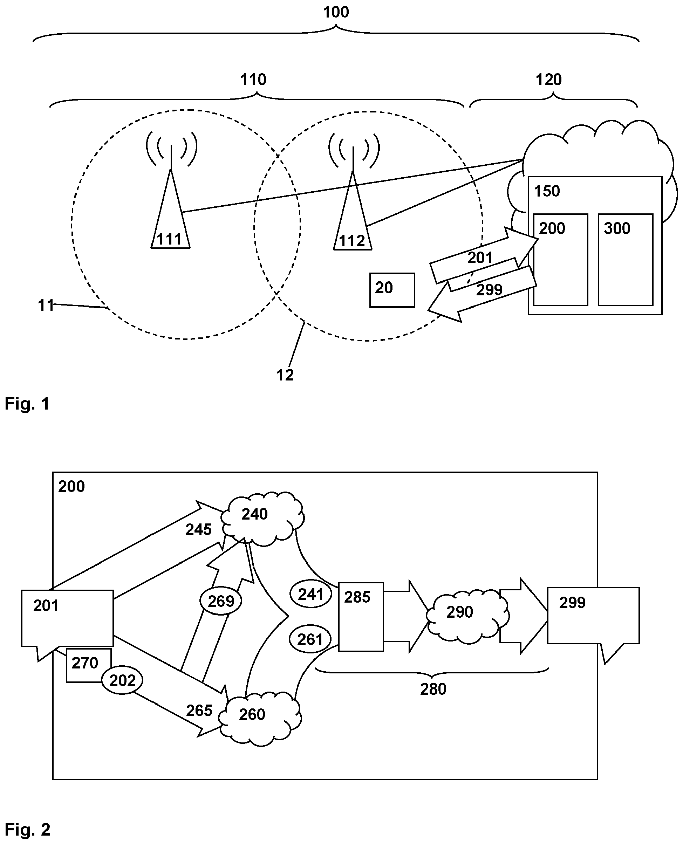

In Figur 1 ist ein Telekommunikationsnetz 100 zur Unterstützung des verbesserten Betriebs an ein Telekommunikationsendgerät 20 eines bereitgestellten Frage-und-Antwort-Dienstes 150 schematisch Kommunikationsnetz 100 nach der vorliegenden Erfindung schematisch dargestellt. Das Telekommunikationsnetz 100 ist nach der beispielhaften Ausführungsform der Figur 1 als ein Mobilfunknetz implementiert, das ein Funkzugangsnetz 110 und ein Kernnetz 120 umfasst. Das Funkzugangsnetz 110 des Telekommunikationsnetzes 100 besteht aus einer Vielzahl von Funkzellen, von denen eine erste Funkzelle 11 und eine zweite Funkzelle 12 exemplarisch dargestellt sind. Die Funkzellen 11, 12 entsprechen geographischen Funkbedeckungsbereichen von Basisstationseinheiten, typischerweise NodeBs, eNodeBs oder gNodeBs, von denen eine erste Basisstationseinheit 111 und eine zweite Basisstationseinheit 112 in Figur 1 schematisch dargestellt ist. Das Telekommunikationsnetz 100 ist so konfiguriert, dass es Kommunikationsdienste für eine Vielzahl von Telekommunikationsendgeräten bereitstellt, wobei jedoch lediglich das Telekommunikationsendgerät 20 dargestellt ist. Der Frage-und-Antwort-Dienst 150 weist ein Künstliche-Intelligenz-System 200 auf oder hat Zugriff auf ein solches bzw. benutzt dieses. Dem Künstliche-Intelligenz-System 200 wird als Eingangsgröße eine Frageinformation 201 zugeführt und das Künstliche-Intelligenz-System 200 erzeugt oder generiert als Ausgangsgröße eine Antwortinformation 299, welche insbesondere an das Telekommunikationsendgerät 20 bereitgestellt wird.

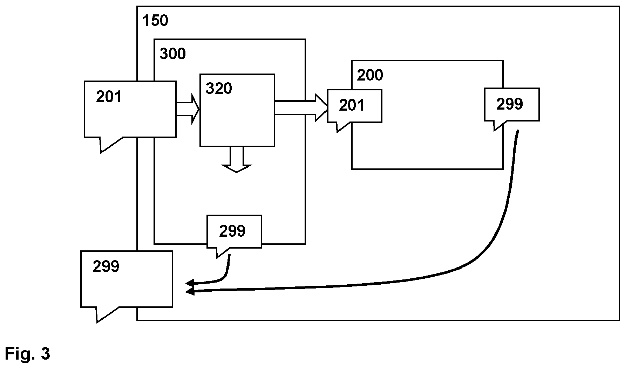

Hierbei ist das Künstliche-Intelligenz-System 200 erfindungsgemäß als ein Open-Domain Künstliche-Intelligenz-System vorgesehen bzw. konfiguriert. Gemäß der in Figur 1 dargestellten Ausführungsform bzw. Ausführungsvariante weist der Frage-und-Antwort-Dienst 150 neben dem Künstliche-Intelligenz-System 200 wenigstens ein weiteres Künstliche-Intelligenz-System 300 auf. Eine solche Konfiguration des Frage-und-Antwort-Dienstes 150 ist auch in Figur 3 dargestellt, d.h. der erfindungsgemäße Frage-und-Antwort-Dienst 150 weist das Künstliche-Intelligenz-System 200 und das weitere Künstliche-Intelligenz-System 300 auf. Das weitere Künstliche-Intelligenz-System 300 ist hierbei insbesondere als ein Closed-Domain Künstliche-Intelligenz-System vorgesehen oder konfiguriert. Dem weiteren Künstliche-Intelligenz-System 300 wird als Eingangsgröße ebenfalls eine Frageinformation 201 zugeführt und das weitere Künstliche-Intelligenz-System 300 erzeugt als Ausgangsgröße ebenfalls eine Antwortinformation 299 (bzw. stellt diese an das Telekommunikationsendgerät 20 bereit). Das weitere Künstliche-Intelligenz-System 300 bzw. der Frage-und-Antwort-Dienst 150 weist insbesondere ein Natürliche-Sprache-Verständnis-Modul 320 auf, mittels dem entschieden wird, ob die Frageinformation 201 dem Künstliche-Intelligenz-System 200 oder dem weiteren Künstliche-Intelligenz-System 300 zur Generierung der Antwortinformation 299 zugeleitet wird.
Erfindungsgemäß sind alternativ zu der in Figur 1 bzw. Figur 3 dargestellten Ausführungsform auch Frage-und-Antwort-Dienste 150 mit lediglich dem Künstliche-Intelligenz-System 200 bzw. einem Künstliche-Intelligenz-System von der Art eines Open-Domain Künstliche-Intelligenz-System möglich und bevorzugt. Ferner kann es alternativ auch vorgesehen sein, dass neben dem Künstliche-Intelligenz-System 200 und dem weiteren Künstliche-Intelligenz-System 300 noch zusätzliche (in Figur 1 nicht dargestellte) Künstliche-Intelligenz-Systeme Teil des Frage-und-Antwort-Dienstes 150 sind.
Hierdurch ist es erfindungsgemäß möglich, dass komplexe Wissensfragen mittels des erfindungsgemäßen Systems bzw. Verfahrens - insbesondere durch das Künstliche-Intelligenz-System 200 - beantwortet werden können. Hierbei können insbesondere einfache Wissensfragen - etwa Frage nach einer bestimmten Abmessung bzw. einem bestimmten Maß eines Geräts oder auch Fragen nach dem Alter einer bestimmten Person -durch ein anderes System beantwortet, insbesondere das weitere Künstliche-Intelligenz-System 300.

Erfindungsgemäß ist es insbesondere vorgesehen, den Frage-und-Antwort-Dienst 150 und insbesondere das Künstliche-Intelligenz-System 200 mit Frageinformationen 201 zu versorgen. Sowohl das Künstliche-Intelligenz-System 200 als auch das weitere Künstliche-Intelligenz-System 300 (sofern vorhanden) beziehen sich darauf, einem Kunden wissensorientierte Fragen zu beantworten: Hierzu ist es erfindungsgemäß in bevorzugter Weise insbesondere vorgesehen, dass sogenannte Intentionen bzw. Intent-Informationen definiert werden, welche in einer NLU-Einheit (Natural Language Understanding) Natürliches-Sprachverstehen-Einheit (bzw. Natürliche-Sprache-Verständnis-Modul), welche insbesondere Teil des Frage-und-Antwort-Diensts 150 bzw. Teil des Künstliche-Intelligenz-System 200 ist, mit maschinellen Lernmodellen trainiert werden. Insbesondere ist erfindungsgemäß das Künstliche-Intelligenz-System 200 an wenigstens eine solche Intent-Information (bzw. an einen Intent-Information-Wert) geknüpft oder aber es ist das Künstliche-Intelligenz-System 200 daran geknüpft, dass ein non-intent-Wert als Intent-information detektiert, festgestellt oder zugeordnet wird. Zur Verteilung von oder zur Analyse von Frageinformationen 201 ist erfindungsgemäß insbesondere ein sogenannter NLU-Dispatcher vorgesehen: Der NLU-Dispatcher ist ein maschinelles Lernmodell, das trainiert wird, um zu ermitteln, welche Fertigkeit die Frage beantworten soll. Soll beispielsweise eine Antwort auf die Frage "Wie wird das Wetter heute in einer bestimmten Stadt?", wird zum einen als Wert der Intent-Information erkannt, dass eine wetterbezogene Frage gestellt wurde (d.h. der Intent-Information-Wert entspricht etwa einem "Wetter-Intent") und löst eine entsprechende Fähigkeit (etwa eine "Wetter-Fähigkeit") aus. Der NLU-Dispatcher wird auch mit einigen Open Domain Q&A Beispielfragen trainiert, die die Wissensfertigkeit auslösen, d.h. die Aktivierung des Künstliche-Intelligenz-Systems 200. Erfindungsgemäß weist der Frage-und-Antwort-Dienst 150 und/oder das Künstliche-Intelligenz-System 200 ferner einen weiteren NLU-Dispatcher auf, der ebenfalls ein maschinelles Lernmodell ist. Dieses Modell wird für die Wissensfertigkeit trainiert. Es identifiziert, welcher Intent bzw. welcher Intent-Information-Wert der Wissensdomäne ausgelöst werden sollte, um die Frage zu beantworten; zur Aktivierung des Künstliche-Intelligenz-System 200 ist es wiederum erforderlich, dass der (diesem Künstliche-Intelligenz-System 200) zugehörige Intent-Information-Wert, beispielsweise der Intent "Open Domain Q&A" oder aber auch der Intent "non-intent", erkannt wird. Falls eine Aktivierung des Künstliche-Intelligenz-Systems 200 erfolgt, wird die zugehörige Verarbeitungskette aktiviert, die nachfolgend im Zusammenhang mit Figur 2 näher beschrieben wird.

In Figur 2 ist ein erfindungsgemäßes Künstliche-Intelligenz-System 200 für einen oder als Teil eines erfindungsgemäßen Frage-und-Antwort-Dienst 150 eines Telekommunikationsnetzes 100 schematisch dargestellt. Wiederum wird dem Künstliche-Intelligenz-System 200 als Eingangsgröße die Frageinformation 201 zugeführt und das Künstliche-Intelligenz-System 200 erzeugt oder generiert als Ausgangsgröße die Antwortinformation 299, welche anschließend insbesondere dem Telekommunikationsendgerät 20 bereitgestellt wird, was jedoch in Figur 2 nicht wiedergegeben ist.

Erfindungsgemäß weist das Künstliche-Intelligenz-System 200 ein erstes Künstliche-Intelligenz-Modul 240 sowie ein zweites Künstliche-Intelligenz-Modul 260 auf oder implementiert diese. Das erste Künstliche-Intelligenz-Modul 240 Teil oder auch Ziel einer Reading-Comprehension-Verarbeitungskette 245 und das zweite Künstliche-Intelligenz-Modul 260 Teil oder auch Ziel einer Search-Verarbeitungskette 265. Bezogen auf eine zu einem bestimmten Zeitpunkt konkret vorliegende, d.h. zu behandelnde, Frageinformation 201, d.h. zur Erzeugung der zu dieser Frageinformation 201 zugehörigen bzw. zu gebenden Antwortinformation 299 werden erfindungsgemäß die nachfolgenden Schritte durchgeführt:

In einem ersten Schritt wird die zu behandelnde Frageinformation 201 der Reading-Comprehension-Verarbeitungskette 245 und der Search-Verarbeitungskette 265 zugeführt.

In einem dem ersten Schritt nachfolgenden zweiten Schritt wird durch die oder in der Search-Verarbeitungskette 265 wenigstens eine Absatzinformation 269 erzeugt und der Reading-Comprehension-Verarbeitungskette 245 zugeführt. In einem dem zweiten Schritt nachfolgenden dritten Schritt generiert das zweite Künstliche-Intelligenz-Modul 260 eine zweite Antwort-Kandidat-Information 261 basierend auf der Search-Verarbeitungskette 265. Zur Verarbeitung der Frageinformation und insbesondere zur Erzeugung der Absatzinformation 269 bzw. der zweiten Antwort-Kandidat-Information 261 in der Search-Verarbeitungskette 265 weist die Search-Verarbeitungskette 265 (und/oder das zweite Künstliche-Intelligenz-Modul 260) ein Frage-Analyse-Modul 270 auf, mittels dem aus der zu behandelnden Frageinformation 201 eine strukturierte Frageinformation 202 erzeugt wird. Die strukturierte Frageinformation 202 wird nunmehr einer Suche auf einem Open-Domain Informations-Datensatz unterzogen bzw. es wird mittels der strukturierten Frageinformation 202 eine Suche auf dem Open-Domain Informations-Datensatz durchgeführt, insbesondere unter Verwendung einer Elasticsearch-Suche. Hierbei wird - insbesondere nach der Durchführung eines Markierungsschritts, insbesondere in Verbindung mit einer bzw. der Elasticsearch-Suche - eine Dokumentinformation erzeugt, insbesondere umfassend eine Mehrzahl an Dokumenten des Open-Domain Informations-Datensatzes. Ferner wird zur Erzeugung der Absatzinformation 269 in der Search-Verarbeitungskette 265 insbesondere wenigstens eine weitere Suche durchgeführt, insbesondere unter Verwendung einer weiteren Elasticsearch-Suche. Hierbei wird - insbesondere nach der Durchführung eines weiteren Markierungsschritts, insbesondere in Verbindung mit einer bzw. der weiteren Elasticsearch-Suche - die Absatzinformation 269 erzeugt, insbesondere umfassend eine Mehrzahl an Absätzen eines oder einer Mehrzahl von Dokumenten des Open-Domain Informations-Datensatzes. Die Absatzinformation 269 wird der Reading-Comprehension-Verarbeitungskette 245 zugeführt und aus der Absatzinformation 269 wird in oder als Teil der Search-Verarbeitungskette 265 die zweite Antwort-Kandidat-Information 261 erzeugt. Das zweite Künstliche-Intelligenz-Modul 260 und/oder die Search-Verarbeitungskette 265 beruht insbesondere auf einem Modell maschinellen Lernens oder umfasst dieses, insbesondere in Form eines Auswahl-Modells und/oder eines Antwort-Extraktions-Modells, wobei insbesondere das Antwort-Extraktions-Modell zur Generierung der zweiten Antwort-Kandidat-Information 261 ausgehend von der Absatzinformation 269 verwendet wird und wobei insbesondere das Auswahl-Modell zur Generierung der Absatzinformation 269 verwendet wird.

Im dritten Schritt generiert ferner auch - d.h. insbesondere im Wesentlichen parallel oder zumindest teilweise zeitgleich zur Generierung der zweiten Antwort-Kandidat-Information 261 durch die Search-Verarbeitungskette 265 bzw. das zweite Künstliche-Intelligenz-Modul 260 - das erste Künstliche-Intelligenz-Modul 240 eine erste Antwort-Kandidat-Information 241 basierend auf der Reading-Comprehension-Verarbeitungskette 245 und der wenigstens einen Absatzinformation 269. Insbesondere wird dem ersten Künstliche-Intelligenz-Modul 240 die Frageinformation 201 in ihrer ursprünglichen Form zugeführt. Das erste Künstliche-Intelligenz-Modul 240 und/oder die Reading-Comprehension-Verarbeitungskette 245 basiert insbesondere auf einem Modell maschinellen Lernens, insbesondere auf der Basis von oder nutzend eines oder einer Mehrzahl der nachfolgenden Systeme oder Systemarchitekturen zur natürlichen Sprachverarbeitung, NLP (natural language processing): QANet, BERT (Bidirectional Encoder Representations from Transformers), GPT-2 (Generative Pretrained Transformer 2), GPT-3 (Generative Pretrained Transformer 3), SQuAD (Stanford Question Answering Dataset), wobei insbesondere dem ersten Künstliche-Intelligenz-Modul 240 zeitlich vor der Durchführung des ersten Schritts Trainingsdaten umfassend Frage-und-Antwort-Paare zugeführt werden. Zur Generierung der ersten Antwort-Kandidat-Information 241 wird somit sowohl die Frageinformation 201 als auch die wenigstens eine Absatzinformation 269 verwendet.

In einem dem dritten Schritt nachfolgenden vierten Schritt wird mittels oder in einer Validierungs-Gewissheits-Verarbeitungskette 280 bewertet und/oder entschieden, ob als zu gebende Antwortinformation 299 die oder ein Teil der ersten Antwort-Kandidat-Information 241 oder die oder ein Teil der zweiten Antwort-Kandidat-Information 261 oder keine von beiden ausgewählt wird oder auszuwählen ist.

Erfindungsgemäß wird - insbesondere während ihrer jeweiligen Generierung durch das erste Künstliche-Intelligenz-System 240 bzw. das zweite Künstliche-Intelligenz-System 260 - der ersten und zweiten Antwort-Kandidat-Information 241, 261 jeweils eine Score-Information zugeordnet bzw. zugewiesen bzw. generiert, welche innerhalb der Validierungs-Gewissheits-Verarbeitungskette 280 für die Bewertung und/oder Entscheidung, welche der Antwort-Kandidat-Informationen für die zu gebende Antwortinformation 299 herangezogen wird oder heranzuziehen ist verwendet wird. Hierbei umfasst die erste Antwort-Kandidat-Information 241 die erste Score-Information und die zweite Antwort-Kandidat-Information 261 die zweite Score-Information.

Erfindungsgemäß ist bevorzugt, dass die Validierungs-Gewissheits-Verarbeitungskette 280 eine Ensemble-Steuerungseinrichtung 285 und ein drittes Künstliche-Intelligenz-Modul 290 aufweist, wobei mittels der Ensemble-Steuerungseinrichtung 285 eine Auswahl aus der ersten und zweiten Antwort-Kandidat-Information 241, 261 auf der Basis der ersten und zweiten Score-Information vorgenommen wird und wobei mittels des dritten Künstliche-Intelligenz-Modul 290 eine Validierung hinsichtlich der Gewissheit einer richtigen Antwort der ersten Antwort-Kandidat-Information 241 und/oder der zweiten Antwort-Kandidat-Information 261 erfolgt, wobei insbesondere die Auswahl aus der ersten und zweiten Antwort-Kandidat-Information 241, 261 in einem ersten Sub-Schritt des vierten Schritts vorgenommen wird und lediglich die ausgewählte Antwort-Kandidat-Information in einem zweiten Sub-Schritt des vierten Schritts mittels des dritten Künstliche-Intelligenz-Moduls 290 validiert wird.

Erfindungsgemäß ist es insbesondere vorgesehen, dass in der Search-Verarbeitungskette 265 und insbesondere im Frage-Analyse-Modul 270 die gesamte Frage des Benutzers (d.h. die Frageinformation 201) analysiert wird. Hierbei findet eine linguistische Analyse der Frage statt, beispielsweise wird nach Fragewörtern gesucht; als Antwort wird beispielsweise beim Fragewort "wieviel" eine Zahl in der Antwort erwartet. Anschließend wird die Frage bzw. die Frageinformation 201 in eine Suchanfrage umgewandelt, insbesondere mittels Elasticsearch, wobei Elasticsearch eine Suchmaschine auf der Basis der Programmbibliothek Lucene ist, die Dokumente in einem NoSQL-Format speichert. Es wird hierbei nach dem Dokument gesucht, das am wahrscheinlichsten die Antwort auf die zu behandelnde Frageinformation 201 enthält. Erfindungsgemäß wird hierzu insbesondere die Hervorhebungsfunktion (Highlighting-Funktionalität) von Elasticsearch verwendet; beispielsweise werden die 10 besten Dokumente mit Hervorhebungen und jeweils mit Score-Werten versehen (d.h. es wird die Dokumentinformation erzeugt, insbesondere umfassend eine Mehrzahl - beispielsweise 10 - an Dokumenten des Open-Domain Informations-Datensatzes). Diese Score-Werte geben an, wie wahrscheinlich es ist, dass das gefundene Dokument die zu gebende Antwort enthält. Nachdem die Dokumentinformation erzeugt wurde, d.h. diejenigen Dokumente (unter den Dokumenten des Open-Domain Informations-Datensatzes) detektiert wurden, die basierend auf dem verwendeten Modell die besten Score-Werte für die zu gebende Antwort aufweisen, wird die Absatzinformation (insbesondere unter den Absätzen der gefundenen, vielversprechendsten Dokumente) erzeugt: Es wird insbesondere erneut die Hervorhebungsfunktion (Highlighting-Funktionalität) von Elasticsearch verwendet, um aus beispielsweise den Top-10-Dokumenten die Top-10-Absätze zu finden, die am wahrscheinlichsten die zu gebende Antwort enthalten. Hierbei wird erfindungsgemäß ein maschinelles Lernmodell (Auswahlmodell) verwendet, um besser zu ermitteln, welcher Absatz die beste Chance hat (d.h. welchem Absatz der höchste (bzw. beste, basierend auf dem verwendeten Modell) Score-Wert zugeordnet wird), die Antwort zu enthalten. Dieser Absatz (oder auch diese Mehrzahl an Absätzen (bspw. ebenfalls die besten 10 Absätze) wird (werden) als Absatzinformation 269 im zweiten Schritt an die Reading-Comprehension-Verarbeitungskette 245 bzw. an das erste Künstliche-Intelligenz-Modul 240 übergeben.

Die Extraktion der Antwort bzw. die Generierung der ersten bzw. zweiten Antwort-Kandidat-Information erfolgt wie folgt: Im ersten Künstliche-Intelligenz-Modul 240 bzw. in der Reading-Comprehension-Verarbeitungskette 245 wird beispielsweise QANet oder Bert oder ein andere Art von Modell des maschinellen Lernens verwendet, um einen Antwortkandidat (erste Antwort-Kandidat-Information 241) der Reading-Comprehension-Verarbeitungskette 245 zu erzeugen oder zu generieren. Im zweiten Künstliche-Intelligenz-Modul 260 bzw. in der Search-Verarbeitungskette 265 werden aus der erzeugten Absatzinformation 269 die am besten geeigneten Sätze (der die Absatzinformation 269 umfassenden Absätze) identifiziert und als (zweite) Antwort-Kandidat-Information 261 der Search-Verarbeitungskette 265 (bzw. des zweiten Künstliche-Intelligenz-Moduls 260) zur Verfügung gestellt. Diese gefundenen Sätze könnten der Antwortinformation 299 entsprechen, d.h. diese könnten als Antwort zur Verfügung gestellt werden, insbesondere an das Telekommunikationsendgerät 20. Insbesondere findet erfindungsgemäß keine Neuformulierung der Antwort statt; d.h. es werden die Sätze, die im Text identifiziert wurden, als die beste Antwort (d.h. in diesem Fall als zweite Antwort-Kandidat-Information 261 und - falls die zweite Antwort-Kandidat-Information 261 im vierten Schritt ausgewählt wurde - als zu gebende Antwortinformation 299) ausgegeben.

Erfindungsgemäß weist die Validierungs-Gewissheits-Verarbeitungskette 280 einen Ensemble-Controller bzw. eine Ensemble-Steuerungseinrichtung 285 auf. Der Ensemble-Controller identifiziert grundsätzlich, welcher Antwortkandidat (d.h. von der ersten und zweiten Antwort-Kandidat-Information 241, 261) am wahrscheinlichsten derjenige mit der besseren Antwort ist, insbesondere basierend auf der ersten und zweiten Score-Information. Die Antwort mit der höheren Punktzahl (d.h. der höchsten Score-Information) hat eine höhere Wahrscheinlichkeit, die bessere Antwort zu sein.

Erfindungsgemäß weist die Validierungs-Gewissheits-Verarbeitungskette 280 ferner auch ein drittes Künstliche-Intelligenz-Modul 290, mittels dem die Gewissheit der ausgewählten Antwort bzw. Antwort-Kandidat-Information bewertet wird: Die ausgewählte Antwort bzw. Antwort-Kandidat-Information wird validiert, ob sie (basierend auf dem verwendeten Modell) wahr oder falsch ist, um falsche Antworten möglichst zu vermeiden. Das Vertrauensmodell ist ein maschinelles Lernmodell, das darauf trainiert wird, richtige oder falsche Antworten zu erkennen. Wenn die ausgewählte Antwort bzw. Antwort-Kandidat-Information als falsche Antwort identifiziert wird, wird als Antwortinformation 299 keine der beiden generierten Antwort-Kandidat-Informationen ausgewählt, sondern eine Ausweichantwort zur Verfügung gestellt, beispielsweise von der Art: "Tut mir leid, das weiß ich leider nicht". Wenn umgekehrt die Antwort bzw. die ausgewählte Antwort-Kandidat-Information richtig ist (bzw. basierend auf dem verwendeten Modell als richtig eingestuft wird), wird sie als Antwortinformation 299 zur Verfügung gestellt bzw. ausgegeben, insbesondere auf dem Telekommunikationsendgerät 20 bzw. an das Telekommunikationsendgerät 20.
Beispielsweise betrifft als Frageinformation 201 und als Antwortinformation 299 die folgende Beispielsituation (unter Verwendung der Reading-Comprehension-Verarbeitungskette 245):
Frageinformation 201: "question":"Wie entsorge ich den Toner aus einem Laserdrucker?"}, {"passage":"Das Abfallgesetz schreibt eine umweltgerechte Entsorgung vor. Zudem sind die Hersteller verpflichtet, leere Tonerkartuschen zur Entsorgung kostenlos zurückzunehmen. Dazu kann man sie z. B. beim Händler abgeben oder dem Hersteller zurücksenden. Außerdem besteht die Möglichkeit, Tonerkartuschen mit Refill-Toner neu zu befüllen, um die Entsorgung ganz zu vermeiden. Verschiedene Unternehmen haben sich auf diese Arbeit spezialisiert und kaufen leere Tonerkartuschen zu Preisen von 10 Cent bis 5 Euro pro Stück an und verkaufen sie nach Befüllung, Austausch von Verschleißteilen und Prüfung als so genannte Rebuilttoner. Dies wird als ökologisch und ökonomisch sinnvoll eingestuft, da die Tonerkartuschen aufwändig konstruiert sind und aus vielen verschiedenen Materialien bestehen. Dementsprechend kostet eine wieder befüllte Kartusche üblicherweise deutlich weniger als eine neue Kartusche. Seit 2012 ist es in Deutschland ebenfalls möglich, defekte Tonerkartuschen der stofflichen Wiederverwertung zuzuführen. In den vorhergehenden Jahren wurden allein in Deutschland ca. 80 % der 55 Millionen Tonnen anfallenden Kartuschen verbrannt. Eine Kartusche benötigt bei der Herstellung im Durchschnitt 2 kg Erdöl und verursacht ca. 6 kg CO2. Eine Entsorgung von Tonerkartuschen darf nicht über die Restmülltonne erfolgen. Auch leere Kartuschen enthalten Reste von Toner und damit giftige, gesundheits- und umweltgefährdende Stoffe, diese dürfen nicht mit dem Hausmüll entsorgt werden. Eine unsachgemäße Entsorgung schließt zudem ein Recyceln oder sogar die Wiederverwendung aus."
Antwortinformation: {"answer": "leere Kartuschen", "score": 0.15770404040813446, "sentence": "\nAuch leere Kartuschen enthalten Reste von Toner und damit giftige, gesundheits- und umweltgefährdende Stoffe, diese dürfen nicht mit dem Hausmüll entsorgt werden."}

## Patentansprüche

1. Verfahren zur Unterstützung des verbesserten Betriebs eines über ein Telekommunikationsnetz (100) einem Telekommunikationsendgerät (20) bereitgestellten Frage-und-Antwort-Dienst [question-and-answer service] (150), wobei der Frage-und-Antwort-Dienst (150) ein Künstliche-Intelligenz-System (200) umfasst oder Zugriff auf ein solches hat oder benutzt, wobei dem Künstliche-Intelligenz-System (200) als Eingangsgröße eine Frageinformation (201) zugeführt wird und das Künstliche-Intelligenz-System (200) als Ausgangsgröße eine Antwortinformation (299) erzeugt und/oder, insbesondere an das Telekommunikationsendgerät (20), bereitstellt, wobei das Künstliche-Intelligenz-System (200) ein Open-Domain Künstliche-Intelligenz-System ist und ein erstes Künstliche-Intelligenz-Modul (240) sowie ein zweites Künstliche-Intelligenz-Modul (260) aufweist oder implementiert, wobei das erste Künstliche-Intelligenz-Modul (240) Teil oder Ziel einer Reading-Comprehension-Verarbeitungskette (245) [reading comprehension processing chain] ist und wobei das zweite Künstliche-Intelligenz-Modul (260) Teil oder Ziel einer Search-Verarbeitungskette (265) [search processing chain] ist,
wobei das Verfahren, bezogen auf eine zu behandelnde Frageinformation (201) und zur Erzeugung einer zu gebenden Antwortinformation (299), die nachfolgenden Schritte aufweist:
-- in einem ersten Schritt wird die zu behandelnde Frageinformation (201) der Reading-Comprehension-Verarbeitungskette (245) und der Search-Verarbeitungskette (265) zugeführt,
-- in einem dem ersten Schritt nachfolgenden zweiten Schritt wird durch die oder in der Search-Verarbeitungskette (265) wenigstens eine Absatzinformation (269) [paragraph information] erzeugt und der Reading-Comprehension-Verarbeitungskette (245) zugeführt,
-- in einem dem zweiten Schritt nachfolgenden dritten Schritt generiert
-- das erste Künstliche-Intelligenz-Modul (240) eine erste Antwort-Kandidat-Information (241) basierend auf der Reading-Comprehension-Verarbeitungskette (245) und der wenigstens einen Absatzinformation (269) und
-- das zweite Künstliche-Intelligenz-Modul (260) eine zweite Antwort-Kandidat-Information (261) basierend auf der Search-Verarbeitungskette (265), wobei die erste Antwort-Kandidat-Information (241) eine erste Score-Information umfasst und wobei die zweite Antwort-Kandidat-Information (261) eine zweite Score-Information umfasst,
-- in einem dem dritten Schritt nachfolgenden vierten Schritt wird mittels oder in einer Validierungs-Gewissheits-Verarbeitungskette [validation confidence processing chain] (280) bewertet und/oder entschieden, ob als zu gebende Antwortinformation (299)
-- die oder ein Teil der ersten Antwort-Kandidat-Information (241) oder
-- die oder ein Teil der zweiten Antwort-Kandidat-Information (261) oder
-- keine von beiden
ausgewählt wird oder auszuwählen ist.

2. Verfahren nach Anspruch 1, **dadurch gekennzeichnet, dass** das erste Künstliche-Intelligenz-Modul (240) und/oder die Reading-Comprehension-Verarbeitungskette (245) auf einem Modell maschinellen Lernens [machine learning model] beruht, insbesondere auf der Basis von oder nutzend eines oder einer Mehrzahl der nachfolgenden Systeme oder Systemarchitekturen zur natürlichen Sprachverarbeitung, NLP, [natural language processing]:
-- QANet
-- BERT (Bidirectional Encoder Representations from Transformers),
-- GPT-2 (Generative Pretrained Transformer 2),
-- GPT-3 (Generative Pretrained Transformer 3),
-- SQuAD (Stanford Question Answering Dataset)
wobei zur Generierung der ersten Antwort-Kandidat-Information (241) die wenigstens eine Absatzinformation (269) verwendet wird,
wobei insbesondere dem ersten Künstliche-Intelligenz-Modul (240) - insbesondere zeitlich vor der Durchführung des ersten Schritts - Trainingsdaten umfassend Frage-und-Antwort-Paare zugeführt werden,
wobei insbesondere dem ersten Künstliche-Intelligenz-Modul (240) die Frageinformation (201) in ihrer ursprünglichen Form zugeführt wird.

3. Verfahren nach einem der vorhergehenden Ansprüche, **dadurch gekennzeichnet, dass** das zweite Künstliche-Intelligenz-Modul (260) und/oder die Search-Verarbeitungskette (265) ein Frage-Analyse-Modul (270) aufweist, wobei mittels des Frage-Analyse-Moduls (270) aus der zu behandelnden Frageinformation (201) eine strukturierte Frageinformation (202) erzeugt wird, wobei die strukturierte Frageinformation (202) einer Suche auf einem Open-Domain Informations-Datensatz unterzogen wird, insbesondere unter Verwendung einer Elasticsearch-Suche, wobei ferner insbesondere wenigstens eine weitere Suche durchgeführt wird, wobei insbesondere das zweite Künstliche-Intelligenz-Modul (260) und/oder die Search-Verarbeitungskette (265) auf einem Modell maschinellen Lernens beruht oder dieses umfasst und insbesondere ein Auswahl-Modell [selection model] und/oder ein Antwort-Extraktions-Modell [answer extraction model] umfasst, wobei ferner, insbesondere zur Generierung der wenigstens einen Absatzinformation (269) und/oder zur Generierung der zweiten Antwort-Kandidat-Information (261), eine Suchoperation und eine Auswahloperation mehrfach erfolgt,
wobei insbesondere zur Generierung der zweiten Antwort-Kandidat-Information (261) das Auswahl-Extraktions-Modell verwendet wird,
wobei insbesondere wenigstens ein Markierungsschritt [highlighting step], insbesondere in Verbindung mit einer Elasticsearch-Suche erfolgt.

4. Verfahren nach einem der vorhergehenden Ansprüche, **dadurch gekennzeichnet, dass** das zweite Künstliche-Intelligenz-Modul (260) und/oder die Search-Verarbeitungskette (265) eine Antwort-Extrahierungs-Funktionalität [answer extraction functionality] aufweist, wobei die Antwort-Extrahierungs-Funktionalität insbesondere auf der Basis der Absatzinformation (269), einen oder eine Mehrzahl von Sätzen aus einem ausgewählten Textabsatz auswählt und als zweite Antwort-Kandidat-Information (261) oder als einen Teil davon bereitstellt.

5. Verfahren nach einem der vorhergehenden Ansprüche, **dadurch gekennzeichnet, dass** die Validierungs-Gewissheits-Verarbeitungskette (280) eine Ensemble-Steuerungseinrichtung [ensemble controller] (285) und ein drittes Künstliche-Intelligenz-Modul (290) aufweist, wobei mittels der Ensemble-Steuerungseinrichtung (285) eine Auswahl aus der ersten und zweiten Antwort-Kandidat-Information (241, 261) auf der Basis der ersten und zweiten Score-Information vorgenommen wird und wobei mittels des dritten Künstliche-Intelligenz-Modul (290) eine Validierung hinsichtlich der Gewissheit einer richtigen Antwort der ersten Antwort-Kandidat-Information (241) und/oder der zweiten Antwort-Kandidat-Information (261) erfolgt,
wobei insbesondere die Auswahl aus der ersten und zweiten Antwort-Kandidat-Information (241, 261) in einem ersten Sub-Schritt des vierten Schritts vorgenommen wird und lediglich die ausgewählte Antwort-Kandidat-Information in einem zweiten Sub-Schritt des vierten Schritts mittels des dritten Künstliche-Intelligenz-Moduls (290) validiert wird.

6. Verfahren nach einem der vorhergehenden Ansprüche, **dadurch gekennzeichnet, dass** der Frage-und-Antwort-Dienst (150) - neben dem Künstliche-Intelligenz-System (200) - ferner ein weiteres Künstliche-Intelligenz-System (300) umfasst oder Zugriff auf ein solches hat oder benutzt, wobei dem weiteren Künstliche-Intelligenz-System (300) als Eingangsgröße ebenfalls eine Frageinformation (201) zugeführt wird und das weitere Künstliche-Intelligenz-System (300) als Ausgangsgröße ebenfalls eine Antwortinformation (299) erzeugt und/oder, insbesondere an das Telekommunikationsendgerät (20), bereitstellt, wobei das weitere Künstliche-Intelligenz-System (300) ein Closed-Domain Künstliche-Intelligenz-System ist und ein Natürliche-Sprache-Verständnis-Modul (320) [natural language understanding module] aufweist, wobei das Verfahren, bezogen auf die zu behandelnde Frageinformation (201) und zur Erzeugung einer zu gebenden Antwortinformation (299), ferner in einem fünften, zeitlich vor dem ersten Schritt erfolgenden Schritt die Bestimmung einer Intent-Information umfasst, wobei in Abhängigkeit der Intent-Information entschieden wird, ob die Frageinformation (201) dem Künstliche-Intelligenz-System (200) oder dem weiteren Künstliche-Intelligenz-System (300) zur Generieriung der Antwortinformation (299) zugeleitet wird,
wobei insbesondere das weitere Künstliche-Intelligenz-System (300) zur Generierung der Antwortinformation (299) ausgewählt wird, sofern die bestimmte Intent-Information einen Wert aus einer vorherbestimmten Gruppe von Intent-Information-Werten aufweist, während das Künstliche-Intelligenz-System (200) zur Generierung der Antwortinformation (299) ausgewählt wird, sofern die bestimmte Intent-Information wenigstens einen anderen Wert aufweist oder einem non-intent-Wert entspricht.

7. Verfahren nach einem der vorhergehenden Ansprüche, **dadurch gekennzeichnet, dass** der über das Telekommunikationsnetz (100) dem Telekommunikationsendgerät (20) bereitgestellte Frage-und-Antwort-Dienst (150) neben dem Künstliche-Intelligenz-System (200) eine Spracherkennungsfunktionalität [voice recognition funtionality] und/oder eine Sprechererkennungsfunktionalität [speaker recognition functionality] und/oder eine Aufweck-Wort-Funktionalität [wake word functionality] und/oder eine Sprache-zu-Text-Funktionalität [speech to text functionality] und/oder eine Text-zu-Sprache-Funktionalität [text to speech functionality] umfasst.

8. System zur Unterstützung des verbesserten Betriebs eines über ein Telekommunikationsnetz (100) einem Telekommunikationsendgerät (20) bereitgestellten Frage-und-Antwort-Dienst [question-and-answer service] (150), wobei der Frage-und-Antwort-Dienst (150) ein Künstliche-Intelligenz-System (200) umfasst oder Zugriff auf ein solches hat oder benutzt, wobei dem Künstliche-Intelligenz-System (200) als Eingangsgröße eine Frageinformation (201) zugeführt wird und das Künstliche-Intelligenz-System (200) als Ausgangsgröße eine Antwortinformation (299) erzeugt und/oder, insbesondere an das Telekommunikationsendgerät (20), bereitstellt, wobei das Künstliche-Intelligenz-System (200) ein Open-Domain Künstliche-Intelligenz-System ist und ein erstes Künstliche-Intelligenz-Modul (240) sowie ein zweites Künstliche-Intelligenz-Modul (260) aufweist oder implementiert, wobei das erste Künstliche-Intelligenz-Modul (240) Teil oder Ziel einer Reading-Comprehension-Verarbeitungskette (245) [reading comprehension processing chain] ist und wobei das zweite Künstliche-Intelligenz-Modul (260) Teil oder Ziel einer Search-Verarbeitungskette (265) [search processing chain] ist,
wobei das System, bezogen auf eine zu behandelnde Frageinformation (201) und zur Erzeugung einer zu gebenden Antwortinformation (299), derart konfiguriert ist, dass:
-- die zu behandelnde Frageinformation (201) wird der Reading-Comprehension-Verarbeitungskette (245) und der Search-Verarbeitungskette (265) zugeführt,
-- es wird durch die oder in der Search-Verarbeitungskette (265) wenigstens eine Absatzinformation (269) [paragraph information] erzeugt und der Reading-Comprehension-Verarbeitungskette (245) zugeführt,
-- es generiert
-- das erste Künstliche-Intelligenz-Modul (240) eine erste Antwort-Kandidat-Information (241) basierend auf der Reading-Comprehension-Verarbeitungskette (245) und der wenigstens einen Absatzinformation (269) und
-- das zweite Künstliche-Intelligenz-Modul (260) eine zweite Antwort-Kandidat-Information (261) basierend auf der Search-Verarbeitungskette (265), wobei die erste Antwort-Kandidat-Information (241) eine erste Score-Information umfasst und wobei die zweite Antwort-Kandidat-Information (261) eine zweite Score-Information umfasst,
-- es wird mittels oder in einer Validierungs-Gewissheits-Verarbeitungskette [validation confidence processing chain] (280) bewertet und/oder entschieden, ob als zu gebende Antwortinformation (299)
-- die oder ein Teil der ersten Antwort-Kandidat-Information (241) oder
-- die oder ein Teil der zweiten Antwort-Kandidat-Information (261) oder
-- keine von beiden
ausgewählt wird oder auszuwählen ist.

9. Telekommunikationsnetz (100) zur Unterstützung des verbesserten Betriebs eines einem mit dem Telekommunikationsnetz (100) verbundenen Telekommunikationsendgeräts (20) bereitgestellten Frage-und-Antwort-Dienst (150), wobei der Frage-und-Antwort-Dienst (150) ein Künstliche-Intelligenz-System (200) umfasst oder Zugriff auf ein solches hat oder benutzt, wobei dem Künstliche-Intelligenz-System (200) als Eingangsgröße eine Frageinformation (201) zugeführt wird und das Künstliche-Intelligenz-System (200) als Ausgangsgröße eine Antwortinformation (299) erzeugt und/oder, insbesondere an das Telekommunikationsendgerät (20), bereitstellt, wobei das Künstliche-Intelligenz-System (200) ein Open-Domain Künstliche-Intelligenz-System ist und ein erstes Künstliche-Intelligenz-Modul (240) sowie ein zweites Künstliche-Intelligenz-Modul (260) aufweist oder implementiert, wobei das erste Künstliche-Intelligenz-Modul (240) Teil oder Ziel einer Reading-Comprehension-Verarbeitungskette (245) ist und wobei das zweite Künstliche-Intelligenz-Modul (260) Teil oder Ziel einer Search-Verarbeitungskette (265) ist,
wobei das Telekommunikationsnetz (100), bezogen auf eine zu behandelnde Frageinformation (201) und zur Erzeugung einer zu gebenden Antwortinformation (299), derart konfiguriert ist, dass:
-- die zu behandelnde Frageinformation (201) wird der Reading-Comprehension-Verarbeitungskette (245) und der Search-Verarbeitungskette (265) zugeführt,
-- es wird durch die oder in der Search-Verarbeitungskette (265) wenigstens eine Absatzinformation (269) [paragraph information] erzeugt und der Reading-Comprehension-Verarbeitungskette (245) zugeführt,
-- es generiert
-- das erste Künstliche-Intelligenz-Modul (240) eine erste Antwort-Kandidat-Information (241) basierend auf der Reading-Comprehension-Verarbeitungskette (245) und der wenigstens einen Absatzinformation (269) und
-- das zweite Künstliche-Intelligenz-Modul (260) eine zweite Antwort-Kandidat-Information (261) basierend auf der Search-Verarbeitungskette (265), wobei die erste Antwort-Kandidat-Information (241) eine erste Score-Information umfasst und wobei die zweite Antwort-Kandidat-Information (261) eine zweite Score-Information umfasst,
-- es wird mittels oder in einer Validierungs-Gewissheits-Verarbeitungskette [validation confidence processing chain] (280) bewertet und/oder entschieden, ob als zu gebende Antwortinformation (299)
-- die oder ein Teil der ersten Antwort-Kandidat-Information (241) oder
-- die oder ein Teil der zweiten Antwort-Kandidat-Information (261) oder
-- keine von beiden
ausgewählt wird oder auszuwählen ist.

10. Frage-und-Antwort-Dienst (150) zur Bereitstellung an ein Telekommunikationsendgerät (20) über ein Telekommunikationsnetz (100), wobei der Frage-und-Antwort-Dienst (150) ein Künstliche-Intelligenz-System (200) umfasst oder Zugriff auf ein solches hat oder benutzt, wobei dem Künstliche-Intelligenz-System (200) als Eingangsgröße eine Frageinformation (201) zugeführt wird und das Künstliche-Intelligenz-System (200) als Ausgangsgröße eine Antwortinformation (299) erzeugt und/oder, insbesondere an das Telekommunikationsendgerät (20), bereitstellt, wobei das Künstliche-Intelligenz-System (200) ein Open-Domain Künstliche-Intelligenz-System ist und ein erstes Künstliche-Intelligenz-Modul (240) sowie ein zweites Künstliche-Intelligenz-Modul (260) aufweist oder implementiert, wobei das erste Künstliche-Intelligenz-Modul (240) Teil oder Ziel einer Reading-Comprehension-Verarbeitungskette (245) [reading comprehension processing chain] ist und wobei das zweite Künstliche-Intelligenz-Modul (260) Teil oder Ziel einer Search-Verarbeitungskette (265) [search processing chain] ist,
wobei der Frage-und-Antwort-Dienst (150), bezogen auf eine zu behandelnde Frageinformation (201) und zur Erzeugung einer zu gebenden Antwortinformation (299), derart konfiguriert ist, dass:
-- die zu behandelnde Frageinformation (201) wird der Reading-Comprehension-Verarbeitungskette (245) und der Search-Verarbeitungskette (265) zugeführt,
-- es wird durch die oder in der Search-Verarbeitungskette (265) wenigstens eine Absatzinformation (269) [paragraph information] erzeugt und der Reading-Comprehension-Verarbeitungskette (245) zugeführt,
-- es generiert
-- das erste Künstliche-Intelligenz-Modul (240) eine erste Antwort-Kandidat-Information (241) basierend auf der Reading-Comprehension-Verarbeitungskette (245) und der wenigstens einen Absatzinformation (269) und
-- das zweite Künstliche-Intelligenz-Modul (260) eine zweite Antwort-Kandidat-Information (261) basierend auf der Search-Verarbeitungskette (265), wobei die erste Antwort-Kandidat-Information (241) eine erste Score-Information umfasst und wobei die zweite Antwort-Kandidat-Information (261) eine zweite Score-Information umfasst,
-- es wird mittels oder in einer Validierungs-Gewissheits-Verarbeitungskette [validation confidence processing chain] (280) bewertet und/oder entschieden, ob als zu gebende Antwortinformation (299)
-- die oder ein Teil der ersten Antwort-Kandidat-Information (241) oder
-- die oder ein Teil der zweiten Antwort-Kandidat-Information (261) oder
-- keine von beiden
ausgewählt wird oder auszuwählen ist.

11. Computerprogramm umfassend Befehle, mit deren Hilfe die Schritte eines Verfahrens nach einem der Ansprüche 1 bis 7 durchführbar sind, wenn das Computerprogramm auf einer programmierbaren Einrichtung, insbesondere auf einem Netzwerkknoten des Telekommunikationsnetzes (100) und/oder als Teil des Frage-und-Antwort-Dienstes (150), ausgeführt wird.

12. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 11 speichert oder überträgt oder wobei das computerlesbare Medium oder das Datenträgersignal den auf der programmierbaren Einrichtung, insbesondere auf einem Netzwerkknoten des Telekommunikationsnetzes (100) und/oder als Teil des Frage-und-Antwort-Dienstes (150), auszuführenden Teil des Computerprogramms nach Anspruch 11 speichert oder überträgt.

## Geänderte Patentansprüche

### Geänderte Patentansprüche gemäss Regel 137(2) EPÜ.

1. Verfahren zur Unterstützung des verbesserten Betriebs eines über ein Telekommunikationsnetz (100) einem Telekommunikationsendgerät (20) bereitgestellten Frage-und-Antwort-Dienst [question-and-answer service] (150), wobei der Frage-und-Antwort-Dienst (150) ein Künstliche-Intelligenz-System (200) umfasst oder Zugriff auf ein solches hat oder benutzt, wobei dem Künstliche-Intelligenz-System (200) als Eingangsgröße eine Frageinformation (201) zugeführt wird und das Künstliche-Intelligenz-System (200) als Ausgangsgröße eine Antwortinformation (299) erzeugt und/oder an das Telekommunikationsendgerät (20) bereitstellt, wobei das Künstliche-Intelligenz-System (200) ein Open-Domain Künstliche-Intelligenz-System ist und ein erstes Künstliche-Intelligenz-Modul (240) sowie ein zweites Künstliche-Intelligenz-Modul (260) aufweist oder implementiert, wobei das erste Künstliche-Intelligenz-Modul (240) Teil oder Ziel einer Reading-Comprehension-Verarbeitungskette (245) [reading comprehension processing chain] ist und wobei das zweite Künstliche-Intelligenz-Modul (260) Teil oder Ziel einer Search-Verarbeitungskette (265) [search processing chain] ist,
wobei das Verfahren, bezogen auf eine zu behandelnde Frageinformation (201) und zur Erzeugung einer zu gebenden Antwortinformation (299), die nachfolgenden Schritte aufweist:
-- in einem ersten Schritt wird die zu behandelnde Frageinformation (201) der Reading-Comprehension-Verarbeitungskette (245) und der Search-Verarbeitungskette (265) zugeführt,
-- in einem dem ersten Schritt nachfolgenden zweiten Schritt wird durch die oder in der Search-Verarbeitungskette (265) wenigstens eine Absatzinformation (269) [paragraph information] erzeugt und der Reading-Comprehension-Verarbeitungskette (245) zugeführt,
-- in einem dem zweiten Schritt nachfolgenden dritten Schritt generiert
-- das erste Künstliche-Intelligenz-Modul (240) eine erste Antwort-Kandidat-Information (241) basierend auf der Reading-Comprehension-Verarbeitungskette (245) und der wenigstens einen Absatzinformation (269) und
-- das zweite Künstliche-Intelligenz-Modul (260) eine zweite Antwort-Kandidat-Information (261) basierend auf der Search-Verarbeitungskette (265), wobei die erste Antwort-Kandidat-Information (241) eine erste Score-Information umfasst und wobei die zweite Antwort-Kandidat-Information (261) eine zweite Score-Information umfasst,
-- in einem dem dritten Schritt nachfolgenden vierten Schritt wird mittels oder in einer Validierungs-Gewissheits-Verarbeitungskette [validation confidence processing chain] (280) bewertet und/oder entschieden, ob als zu gebende Antwortinformation (299)
-- die oder ein Teil der ersten Antwort-Kandidat-Information (241) oder
-- die oder ein Teil der zweiten Antwort-Kandidat-Information (261) oder
-- keine von beiden
ausgewählt wird oder auszuwählen ist.

2. Verfahren nach Anspruch 1, **dadurch gekennzeichnet, dass** das erste Künstliche-Intelligenz-Modul (240) und/oder die Reading-Comprehension-Verarbeitungskette (245) auf einem Modell maschinellen Lernens [machine learning model] beruht auf der Basis von oder nutzend eines oder einer Mehrzahl der nachfolgenden Systeme oder Systemarchitekturen zur natürlichen Sprachverarbeitung, NLP, [natural language processing]:
-- QANet
-- BERT (Bidirectional Encoder Representations from Transformers),
-- GPT-2 (Generative Pretrained Transformer 2),
-- GPT-3 (Generative Pretrained Transformer 3),
-- SQuAD (Stanford Question Answering Dataset)
wobei zur Generierung der ersten Antwort-Kandidat-Information (241) die wenigstens eine Absatzinformation (269) verwendet wird,
wobei dem ersten Künstliche-Intelligenz-Modul (240) -zeitlich vor der Durchführung des ersten Schritts - Trainingsdaten umfassend Frage-und-Antwort-Paare zugeführt werden,
wobei dem ersten Künstliche-Intelligenz-Modul (240) die Frageinformation (201) in ihrer ursprünglichen Form zugeführt wird.

3. Verfahren nach einem der vorhergehenden Ansprüche, **dadurch gekennzeichnet, dass** das zweite Künstliche-Intelligenz-Modul (260) und/oder die Search-Verarbeitungskette (265) ein Frage-Analyse-Modul (270) aufweist, wobei mittels des Frage-Analyse-Moduls (270) aus der zu behandelnden Frageinformation (201) eine strukturierte Frageinformation (202) erzeugt wird, wobei die strukturierte Frageinformation (202) einer Suche auf einem Open-Domain Informations-Datensatz unterzogen wird unter Verwendung einer Elasticsearch-Suche, wobei ferner wenigstens eine weitere Suche durchgeführt wird, wobei das zweite Künstliche-Intelligenz-Modul (260) und/oder die Search-Verarbeitungskette (265) auf einem Modell maschinellen Lernens beruht oder dieses umfasst und ein Auswahl-Modell [selection model] und/oder ein Antwort-Extraktions-Modell [answer extraction model] umfasst, wobei ferner zur Generierung der wenigstens einen Absatzinformation (269) und/oder zur Generierung der zweiten Antwort-Kandidat-Information (261) eine Suchoperation und eine Auswahloperation mehrfach erfolgt,
wobei zur Generierung der zweiten Antwort-Kandidat-Information (261) das Auswahl-Extraktions-Modell verwendet wird,
wobei wenigstens ein Markierungsschritt [highlighting step], in Verbindung mit einer Elasticsearch-Suche erfolgt.

4. Verfahren nach einem der vorhergehenden Ansprüche, **dadurch gekennzeichnet, dass** das zweite Künstliche-Intelligenz-Modul (260) und/oder die Search-Verarbeitungskette (265) eine Antwort-Extrahierungs-Funktionalität [answer extraction functionality] aufweist, wobei die Antwort-Extrahierungs-Funktionalität auf der Basis der Absatzinformation (269), einen oder eine Mehrzahl von Sätzen aus einem ausgewählten Textabsatz auswählt und als zweite Antwort-Kandidat-Information (261) oder als einen Teil davon bereitstellt.

5. Verfahren nach einem der vorhergehenden Ansprüche, **dadurch gekennzeichnet, dass** die Validierungs-Gewissheits-Verarbeitungskette (280) eine Ensemble-Steuerungseinrichtung [ensemble controller] (285) und ein drittes Künstliche-Intelligenz-Modul (290) aufweist, wobei mittels der Ensemble-Steuerungseinrichtung (285) eine Auswahl aus der ersten und zweiten Antwort-Kandidat-Information (241, 261) auf der Basis der ersten und zweiten Score-Information vorgenommen wird und wobei mittels des dritten Künstliche-Intelligenz-Modul (290) eine Validierung hinsichtlich der Gewissheit einer richtigen Antwort der ersten Antwort-Kandidat-Information (241) und/oder der zweiten Antwort-Kandidat-Information (261) erfolgt,
wobei idie Auswahl aus der ersten und zweiten Antwort-Kandidat-Information (241, 261) in einem ersten Sub-Schritt des vierten Schritts vorgenommen wird und lediglich die ausgewählte Antwort-Kandidat-Information in einem zweiten Sub-Schritt des vierten Schritts mittels des dritten Künstliche-Intelligenz-Moduls (290) validiert wird.

6. Verfahren nach einem der vorhergehenden Ansprüche, **dadurch gekennzeichnet, dass** der Frage-und-Antwort-Dienst (150) - neben dem Künstliche-Intelligenz-System (200) - ferner ein weiteres Künstliche-Intelligenz-System (300) umfasst oder Zugriff auf ein solches hat oder benutzt, wobei dem weiteren Künstliche-Intelligenz-System (300) als Eingangsgröße ebenfalls eine Frageinformation (201) zugeführt wird und das weitere Künstliche-Intelligenz-System (300) als Ausgangsgröße ebenfalls eine Antwortinformation (299) erzeugt und/oder an das Telekommunikationsendgerät (20) bereitstellt, wobei das weitere Künstliche-Intelligenz-System (300) ein Closed-Domain Künstliche-Intelligenz-System ist und ein Natürliche-Sprache-Verständnis-Modul (320) [natural language understanding module] aufweist, wobei das Verfahren, bezogen auf die zu behandelnde Frageinformation (201) und zur Erzeugung einer zu gebenden Antwortinformation (299), ferner in einem fünften, zeitlich vor dem ersten Schritt erfolgenden Schritt die Bestimmung einer Intent-Information umfasst, wobei in Abhängigkeit der Intent-Information entschieden wird, ob die Frageinformation (201) dem Künstliche-Intelligenz-System (200) oder dem weiteren Künstliche-Intelligenz-System (300) zur Generieriung der Antwortinformation (299) zugeleitet wird, wobei das weitere Künstliche-Intelligenz-System (300) zur Generierung der Antwortinformation (299) ausgewählt wird, sofern die bestimmte Intent-Information einen Wert aus einer vorherbestimmten Gruppe von Intent-Information-Werten aufweist, während das Künstliche-Intelligenz-System (200) zur Generierung der Antwortinformation (299) ausgewählt wird, sofern die bestimmte Intent-Information wenigstens einen anderen Wert aufweist oder einem non-intent-Wert entspricht.

7. Verfahren nach einem der vorhergehenden Ansprüche, **dadurch gekennzeichnet, dass** der über das Telekommunikationsnetz (100) dem Telekommunikationsendgerät (20) bereitgestellte Frage-und-Antwort-Dienst (150) neben dem Künstliche-Intelligenz-System (200) eine Spracherkennungsfunktionalität [voice recognition funtionality] und/oder eine Sprechererkennungsfunktionalität [speaker recognition functionality] und/oder eine Aufweck-Wort-Funktionalität [wake word functionality] und/oder eine Sprache-zu-Text-Funktionalität [speech to text functionality] und/oder eine Textzu-Sprache-Funktionalität [text to speech functionality] umfasst.

8. Telekommunikationsnetz (100) zur Unterstützung des verbesserten Betriebs eines einem mit dem Telekommunikationsnetz (100) verbundenen Telekommunikationsendgeräts (20) bereitgestellten Frage-und-Antwort-Dienst (150), wobei der Frage-und-Antwort-Dienst (150) ein Künstliche-Intelligenz-System (200) umfasst oder Zugriff auf ein solches hat oder benutzt, wobei dem Künstliche-Intelligenz-System (200) als Eingangsgröße eine Frageinformation (201) zugeführt wird und das Künstliche-Intelligenz-System (200) als Ausgangsgröße eine Antwortinformation (299) erzeugt und/oder an das Telekommunikationsendgerät (20) bereitstellt, wobei das Künstliche-Intelligenz-System (200) ein Open-Domain Künstliche-Intelligenz-System ist und ein erstes Künstliche-Intelligenz-Modul (240) sowie ein zweites Künstliche-Intelligenz-Modul (260) aufweist oder implementiert, wobei das erste Künstliche-Intelligenz-Modul (240) Teil oder Ziel einer Reading-Comprehension-Verarbeitungskette (245) ist und wobei das zweite Künstliche-Intelligenz-Modul (260) Teil oder Ziel einer Search-Verarbeitungskette (265) ist,
wobei das Telekommunikationsnetz (100), bezogen auf eine zu behandelnde Frageinformation (201) und zur Erzeugung einer zu gebenden Antwortinformation (299), derart konfiguriert ist, dass:
-- die zu behandelnde Frageinformation (201) wird der Reading-Comprehension-Verarbeitungskette (245) und der Search-Verarbeitungskette (265) zugeführt,
-- es wird durch die oder in der Search-Verarbeitungskette (265) wenigstens eine Absatzinformation (269) [paragraph information] erzeugt und der Reading-Comprehension-Verarbeitungskette (245) zugeführt,
-- es generiert
-- das erste Künstliche-Intelligenz-Modul (240) eine erste Antwort-Kandidat-Information (241) basierend auf der Reading-Comprehension-Verarbeitungskette (245) und der wenigstens einen Absatzinformation (269) und
-- das zweite Künstliche-Intelligenz-Modul (260) eine zweite Antwort-Kandidat-Information (261) basierend auf der Search-Verarbeitungskette (265), wobei die erste Antwort-Kandidat-Information (241) eine erste Score-Information umfasst und wobei die zweite Antwort-Kandidat-Information (261) eine zweite Score-Information umfasst,
-- es wird mittels oder in einer Validierungs-Gewissheits-Verarbeitungskette [validation confidence processing chain] (280) bewertet und/oder entschieden, ob als zu gebende Antwortinformation (299)
-- die oder ein Teil der ersten Antwort-Kandidat-Information (241) oder
-- die oder ein Teil der zweiten Antwort-Kandidat-Information (261) oder
-- keine von beiden
ausgewählt wird oder auszuwählen ist.

9. Frage-und-Antwort-Dienst (150) zur Bereitstellung an ein Telekommunikationsendgerät (20) über ein Telekommunikationsnetz (100), wobei der Frage-und-Antwort-Dienst (150) ein Künstliche-Intelligenz-System (200) umfasst oder Zugriff auf ein solches hat oder benutzt, wobei dem Künstliche-Intelligenz-System (200) als Eingangsgröße eine Frageinformation (201) zugeführt wird und das Künstliche-Intelligenz-System (200) als Ausgangsgröße eine Antwortinformation (299) erzeugt und/oder an das Telekommunikationsendgerät (20) bereitstellt, wobei das Künstliche-Intelligenz-System (200) ein Open-Domain Künstliche-Intelligenz-System ist und ein erstes Künstliche-Intelligenz-Modul (240) sowie ein zweites Künstliche-Intelligenz-Modul (260) aufweist oder implementiert, wobei das erste Künstliche-Intelligenz-Modul (240) Teil oder Ziel einer Reading-Comprehension-Verarbeitungskette (245) [reading comprehension processing chain] ist und wobei das zweite Künstliche-Intelligenz-Modul (260) Teil oder Ziel einer Search-Verarbeitungskette (265) [search processing chain] ist,
wobei der Frage-und-Antwort-Dienst (150), bezogen auf eine zu behandelnde Frageinformation (201) und zur Erzeugung einer zu gebenden Antwortinformation (299), derart konfiguriert ist, dass:
-- die zu behandelnde Frageinformation (201) wird der Reading-Comprehension-Verarbeitungskette (245) und der Search-Verarbeitungskette (265) zugeführt,
-- es wird durch die oder in der Search-Verarbeitungskette (265) wenigstens eine Absatzinformation (269) [paragraph information] erzeugt und der Reading-Comprehension-Verarbeitungskette (245) zugeführt,
-- es generiert
-- das erste Künstliche-Intelligenz-Modul (240) eine erste Antwort-Kandidat-Information (241) basierend auf der Reading-Comprehension-Verarbeitungskette (245) und der wenigstens einen Absatzinformation (269) und
-- das zweite Künstliche-Intelligenz-Modul (260) eine zweite Antwort-Kandidat-Information (261) basierend auf der Search-Verarbeitungskette (265), wobei die erste Antwort-Kandidat-Information (241) eine erste Score-Information umfasst und wobei die zweite Antwort-Kandidat-Information (261) eine zweite Score-Information umfasst,
-- es wird mittels oder in einer Validierungs-Gewissheits-Verarbeitungskette [validation confidence processing chain] (280) bewertet und/oder entschieden, ob als zu gebende Antwortinformation (299)
-- die oder ein Teil der ersten Antwort-Kandidat-Information (241) oder
-- die oder ein Teil der zweiten Antwort-Kandidat-Information (261) oder
-- keine von beiden
ausgewählt wird oder auszuwählen ist.

10. System zur Unterstützung des verbesserten Betriebs eines über ein Telekommunikationsnetz (100) einem Telekommunikationsendgerät (20) bereitgestellten Frage-und-Antwort-Dienst [question-and-answer service] (150), wobei das System den Frage-und-Antwort-Dienst [question-and-answer service] (150) gemäß Anspruch 9 umfasst.

11. Computerprogramm umfassend Befehle, mit deren Hilfe die Schritte eines Verfahrens nach einem der Ansprüche 1 bis 7 durchführbar sind, wenn das Computerprogramm auf einer programmierbaren Einrichtung, insbesondere auf einem Netzwerkknoten des Telekommunikationsnetzes (100) und/oder als Teil des Frage-und-Antwort-Dienstes (150), ausgeführt wird.

12. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 11 speichert oder überträgt oder wobei das computerlesbare Medium oder das Datenträgersignal den auf der programmierbaren Einrichtung, insbesondere auf einem Netzwerkknoten des Telekommunikationsnetzes (100) und/oder als Teil des Frage-und-Antwort-Dienstes (150), auszuführenden Teil des Computerprogramms nach Anspruch 11 speichert oder überträgt.
